# EUROPEAN PATENT APPLICATION

(11) **EP 4 848 227 A1**
(43) Date of publication of application: **02.12.2026**
(21) Application number: 25858782.3
(22) Date of filing: 16.07.2025
(51) Int. Cl.: G06V 20/40

(54) **IMAGE PROCESSING METHOD AND APPARATUS, DEVICE, MEDIUM, AND PROGRAM PRODUCT**

(30) Priority: 30.08.2024 CN 202411207148
(71) Applicant: Tencent Technology (Shenzhen) Company Limited, Shenzhen, Guangdong 518057 (CN)
(72) Inventor: FENG, Xin, Shenzhen, Guangdong 518057 (CN)
(74) Representative: Reddie & Grose LLP
(86) International application number: PCT/CN2025/108818
(87) International publication number: WO 2026/045738

(57) **Abstract**

Disclosed in embodiments of the present application are an image processing method and apparatus, a device, a medium, and a program product. The method comprises: acquiring a reference image and a content description text; performing encoding and copying processing on the reference image to obtain N image encoded features to be attenuated; performing feature attenuation processing on said N image encoded features to obtain N attenuated image encoded features; and according to image content described in the content description text, performing video generation processing on the N attenuated image encoded features to obtain a target video. By applying the embodiments of the present application, it can be ensured that image content of each video frame in the target video and image content of the reference image have both content diversity and content consistency.

## Description

### RELATED APPLICATION

This application claims priority to Chinese Patent Application No. 2024112071482, filed with the China National Intellectual Property Administration on August 30, 2024 and entitled "IMAGE PROCESSING METHOD AND APPARATUS, DEVICE, MEDIUM, AND PROGRAM PRODUCT".

### FIELD OF THE TECHNOLOGY

This application relates to the field of computer technology, and in particular, to the field of artificial intelligence, and specifically relates to an image processing method and apparatus, a device, a medium, and a program product.

### BACKGROUND OF THE DISCLOSURE

Image-to-video is a process of generating, based on a single image, a video matching image content of the single image.

Currently, generation of a video based on an image by using a diffusion model is supported. For example, adding a time sequence dimension to the diffusion model may lead to excessive loss of content information in the reference image, causing inconsistency between the image content of each video frame in the video and the image content of the reference image. For another example, if only encoding features for the reference image are added to a stage of generating latent space features may cause inconsistency with the image content of the reference image in denoising and generation stages. In addition, both of the foregoing two related technologies have a risk that the image content of each video frame in a generated frame sequence is completely the same, resulting in the generated video content having no content change effect.

Therefore, how to realize image-to-video becomes a research hotspot.

### SUMMARY

Embodiments of this application provide an image processing method and apparatus, a device, a medium, and a program product, which can ensure that an image content of each video frame in a target video matches a video content described in a content description text while ensuring a content difference and content consistency between the image content of each video frame and the image content of a reference image.

According to one aspect, an embodiment of this application provides an image processing method, including:
acquiring a reference image and a content description text, the content description text describing a video content in a target video to be generated based on the reference image, the target video comprising N video frames in sequence and N being a positive integer;
performing encoding and copying processing on the reference image to obtain N encoded image features, the encoded image feature representing a content characteristic of a reference image content;
performing feature attenuation processing on the N encoded image features to obtain N attenuated encoded image features, the feature attenuation processing being used for controlling a content difference between an image content of each of the N video frames and the reference image content; and
performing video generation processing on the N attenuated encoded image features according to the content description text to generate the target video, where each of the N video frames is generated based on a respective one of the N attenuated encoded image features.

According to another aspect, an embodiment of this application provides an image processing apparatus, including:
an acquisition unit, configured to acquire a reference image and a content description text, the content description text describing a video content in a target video to be generated based on the reference image, the target video comprising N video frames in sequence and N being a positive integer; and
a processing unit, configured to perform encoding and copying processing on the reference image to obtain N encoded image features, the encoded image feature representing a content characteristic of a reference image content;
the processing unit being further configured to perform feature attenuation processing on the N encoded image features to obtain N attenuated encoded image features, the feature attenuation processing being used for controlling a content difference between an image content of each of the N video frames and the reference image content; and
the processing unit being further configured to perform video generation processing on the N attenuated encoded image features according to the content description text to generate the target video, where each of the N video frames is generated based on a respective one of the N attenuated encoded image features.

According to another aspect, an embodiment of this application provides a computer device, including:
a processor, suitable for executing computer programs; and
a computer-readable storage medium, having a computer program stored therein, the computer program, when executed by the processor, implementing the foregoing image processing method.

According to another aspect, an embodiment of this application provides a computer-readable storage medium, having a computer program stored therein, the computer program being suitable for being loaded by a processor to perform the foregoing image processing method.

According to another aspect, an embodiment of this application provides a computer program product, including a computer program, the computer program, when executed by a processor, implementing the foregoing image processing method.

In the embodiments of this application, the reference image is acquired as information for guiding the generation of the target video, and the content description text is acquired to describe the video content to be included in the target video. Then, copying and encoding processing is performed on the reference image to obtain the N encoded image features to be attenuated. Any one of the encoded image features to be attenuated represents the content characteristic of the reference image content of the reference image, and the N encoded image features and the N video frames of the frame sequence to be generated are in a one-to-one correspondence with each other. Feature attenuation processing is performed on the N encoded image features to obtain the N attenuated encoded image features. In one aspect, there is a feature difference between each attenuated encoded image feature and the encoded image feature to be attenuated, thereby ensuring content differences between the N video frames generated based on the N attenuated encoded image features having feature differences; and relying on the fact that the N attenuated encoded image features represent the content characteristics of the image content of the reference image to varying feature extents, the image content of each video frame in the target video generated based on the N attenuated encoded image features has content consistency with the image content of the reference image. In another aspect, reference to the reference image is reduced frame by frame in the process of generating the N video frames according to the reference image, so that more image content described in the content description text is introduced in the video generation process to constrain/guide the generation of the target video. In this way, the image content of each video frame in the frame sequence included in the target video can match the image content described in the content description text, for example, representation forms of the subject in the video frame (for example, the action of a person matches the action described in the content description text); and moreover, the video content described in the content description text can assist in the generation of image elements of the part having content differences between the image content of the video frame and the image content of the reference image. In still another aspect, each attenuated encoded image feature in the N attenuated encoded image features is used for generating one video frame. Because the N attenuated encoded image features are different from each other, the image contents of the N video frames are different from each other, thereby ensuring that the target video can present a content change effect.

### BRIEF DESCRIPTION OF THE DRAWINGS

FIG. 1a is a schematic diagram of a basic framework of training of a Stable Diffusion model according to an exemplary embodiment of this application.
FIG. 1b is a schematic diagram of a basic framework of inference of a Stable Diffusion model according to an exemplary embodiment of this application.
FIG. 2 is a schematic diagram of a model structure of a video generation model obtained by embedding a spatio-temporal attention module into a Stable Diffusion model according to an exemplary embodiment of this application.
FIG. 3 is a schematic diagram of an architecture of an image processing system when a feature embedding mechanism is a latent space embedding mechanism according to an exemplary embodiment of this application.
FIG. 4a is a schematic diagram of a model structure obtained after a feature extraction module in a video generation model is fine-tuned according to an exemplary embodiment of this application.
FIG. 4b is a schematic diagram of an architecture of an image processing system when a feature embedding mechanism is a multi-level cross attention mechanism according to an exemplary embodiment of this application.
FIG. 5 is a schematic diagram of an architecture of an image processing system when a feature embedding mechanism is a dual-stream consistency embedding mechanism according to an exemplary embodiment of this application.
FIG. 6 is a schematic diagram of a scenario architecture of an application scenario according to an exemplary embodiment of this application.
FIG. 7 is a schematic flowchart of an image processing method according to an exemplary embodiment of this application.
FIG. 8 is a schematic diagram of an interface of uploading a reference image and a content description text according to an exemplary embodiment of this application.
FIG. 9 is a schematic flowchart of computation of feature attenuation processing according to an exemplary embodiment of this application.
FIG. 10 is a schematic diagram of embedding N attenuated latent space reference features into N latent space noise initialization features according to an exemplary embodiment of this application.
FIG. 11 is another schematic flowchart of an image processing method according to an exemplary embodiment of this application.
FIG. 12 is a schematic flowchart of performing encoded image processing on a reference image by using an image encoder used in a multi-level cross attention embedding mechanism according to an exemplary embodiment of this application.
FIG. 13 is another schematic flowchart of performing image encoding processing on a reference image in a multi-level cross attention embedding mechanism according to an exemplary embodiment of this application.
FIG. 14 is a schematic structural diagram of a fine-tuned feature extraction module according to an exemplary embodiment of this application.
FIG. 15 is still another schematic flowchart of an image processing method according to an exemplary embodiment of this application.
FIG. 16 is a schematic structural diagram of an image processing apparatus according to an exemplary embodiment of this application.
FIG. 17 is a schematic structural diagram of a computer device according to an exemplary embodiment of this application.

### DESCRIPTION OF EMBODIMENTS

In embodiments of this application, an image processing solution is provided, and specifically, an image-to-video generation solution is provided. Image-to-video is a process of converting a static image into a dynamic video. That is, a static image is provided as a content reference, and a corresponding video is obtained through conversion with reference to the static image. The video obtained through conversion includes a frame sequence formed by N video frames. N is a positive integer. In this way, the essence of a process of converting an image is generating N video frames based on the image, and the N video frames form a video (i.e., a video frame sequence, which is referred to as a frame sequence for short) according to a playback time order.

In the image-to-video technology, it is required to ensure content consistency and a content difference between an image content of each video frame in the frame sequence and an image content of the static image. 1. It is required to maintain content consistency between the image content of each video frame in the frame sequence obtained by image-to-video conversion and the image content of the static image. The content consistency may be understood as that a subject (which may be referred to as a subject content) in the image content of each video frame is the same as a subject in the image content of the static image. A subject in an image content (an subject in an image or a video frame) may be understood as a main object in the image or the video frame, that is, an object to be highlighted in the image or the video frame. For example, in a person image, an object to be highlighted in the person image is a person. Therefore, after a video is generated based on the person image, it is required to ensure that the person included in each video frame in the video is the same as the person in the person image, for example, in terms of the appearance and clothes of the person, and it is required to ensure that the person in the video frame and the person in the person image can be recognized as the same person. In a landscape image, an object to be highlighted in the landscape image is a mountain, a lake, and the like. Therefore, after the video is generated based on the landscape image, it is required to ensure that a mountain and a lake included in each video frame in the video are the same as the mountain and the lake in the landscape image, for example, in terms of relative positions of the mountain and the lake, the shape of the mountain, and the shape of the lake.

2. It is required to maintain a content difference between the image content of each video frame in the frame sequence obtained by image-to-video conversion and the image content of the static image. The content difference may be understood as that presentation forms of the subject in the image content of each video frame are different from presentation forms of the subject in the image content of the static image. For example, when the static image is a person image, presentation forms of the person may include, but not limited to, presentation forms of expressions (such as smiling, pouting, blinking, and pursed lips), and presentation forms of four limbs (such as walking, standing still, jumping, and running). For another example, when the static image is a landscape image and the subject in the landscape image is a mountain and a lake, presentation forms of the mountain may include objects (such as trees or grass) on the mountain that flutter with the wind, and presentation forms of the lake may include ripples on the lake, and the like. The content difference between the image content of the static image and the image content of each video frame is controlled, to ensure that the video presents a dynamic visual effect, thereby meeting the image-to-video requirement for generation of the dynamic video based on the static image.

To ensure that the video generated by using the image-to-video technology can meet requirements on content consistency and content difference, i.e., to ensure that the video content of the video generated by using the image-to-video technology is generated based on the desired subject content and can present a dynamic effect with desired presentation forms, an image-to-video generation solution is provided in the embodiments of this application, specifically an image-to-video generation solution based on attenuated feature injection. The general principle of the solution may include:

A reference image and a content description text are acquired. The reference image is used for generating a target video (the target video includes a frame sequence formed by N video frames). Specifically, a subject content in an image content of the reference image is used for generating a subject content in an image content of each video frame in the frame sequence, to ensure content consistency between the image content of each video frame in the frame sequence and the reference image content of the reference image. The content description text is used for describing a video content to be included in the target video to be generated, specifically describing the image content to be included in each video frame in the frame sequence corresponding to the target video to be generated, and specifically, used for guiding a presentation form change trend of the subject in the image content of each video frame in the frame sequence, for example, an action change of a person in the image content of the video frame. Then, encoding and copying processing is performed on the reference image to obtain N to-be-attenuated encoded image features. The to-be-attenuated encoded image features are used for representing content characteristics of an image content of the reference image. In other words, the encoding and copying processing performed on the reference image is intended to extract a feature of the subject in the image content of the reference image and copy the feature to obtain N copies, each corresponding to one video frame. Next, feature attenuation processing is performed on the N to-be-attenuated encoded image features to obtain N attenuated encoded image features. The feature attenuation processing can be used for controlling the content difference between the image content of each video frame in the frame sequence and the reference image content, that is, ensuring that when the attenuated encoded image feature is used for generating a video frame, the image content of the video frame can have a content difference from the image content of the reference image. In this way, after video generation processing is performed on the N attenuated encoded image features according to the video content described in the content description text, a target video having both the content difference and the content consistency between the image content of each video frame and the reference image content can be obtained. The content description text functions, during the video generation processing, to introduce the video content described in the content description text when the video frame having a content difference from the image content of the reference image is generated, so as to guide a difference change point or trend of the content difference. For example, the difference change point between presentation forms (for example, lip bending amplitude) of a face in the image content of the reference image and presentation forms of a face in the image content of the video frame is guided by the content description text.

As can be seen, on one hand, in this embodiment of this application, a reference image (denoted as ref image) is introduced as a base picture for generating a target video. The base picture is used as reference information throughout the video generation process. That is, reference is made to content information in the base picture throughout the frame sequence generation process to ensure content consistency between the image content of each video frame in the generated frame sequence and a picture content in the base picture, thereby preventing sudden content changes in the video content of the target video, and greatly improving the content consistency between the entire content in the target video and the image content of the reference image. On the other hand, the to-be-attenuated encoded image features extracted from the reference image needs to be subjected to feature attenuation processing, and are then embedded during the video generation process. This attenuation-based embedding mode can attenuate guiding information (that is, the to-be-attenuated encoded image features) computed based on the ref image over time (for example, a playback time of the frame sequence), thereby guiding generation of image contents in the video frames corresponding to different timestamps according to the attenuated encoded image features, and ensuring the content difference between the image content of each video frame in the frame sequence and the image content of the reference image. In addition, the difference point of the content difference between adjacent video frames is generated based on the video content described in the content description text, thereby improving video quality of the target video, and specifically, ensuring that the entire video content of the target video meets user requirements.

The image processing solution provided in this embodiment of this application is implemented based on a video generation model. Specifically, after the N attenuated encoded image features of the reference image are obtained, the N attenuated encoded image features need to be embedded to a process of invoking the video generation model to perform video generation processing, so as to convert the reference image into the target video. The video generation model is obtained by improving a basic diffusion model. The improvements include adding a spatio-temporal attention module to the basic diffusion model and adding an attention mechanism to the basic diffusion model. For ease of better understanding the architecture and principle of the video generation model, the following first describes the basic diffusion model and the spatio-temporal attention module.

### (1) Diffusion model:

A diffusion model (also referred to as a text-to-image diffusion model) is a pretraining model, and may be considered as a series of denoising autoencoders. The purpose of the diffusion model is to eliminate Gaussian noise continuously applied to a training image, and control generation of a picture (referred to as an image) by inputting text in the process of pretraining the diffusion model. Specifically, the diffusion model includes two main processes: forward diffusion and reverse diffusion. In the forward diffusion stage, an image is polluted by noise that is gradually introduced until the image becomes completely random noise. In the reverse process, the noise is gradually removed and predicted at each time step (or timestamp, for example, 1 second) by using a series of Markov chains, to recover data from the Gaussian noise, thereby generate an image. Further, there are many types of diffusion models. In the embodiments of this application, an example in which the diffusion model is latent diffusion models (LDMs) is used for description. The latent diffusion models may be referred to as a Stable Diffusion model, which diffuses in a latent space instead of a pixel space, thereby saving the internal memory. In addition, a Transformer-based text semantic feedback is used in combination, so that diversified and highly detailed images can be generated while preserving the semantic structure of data.

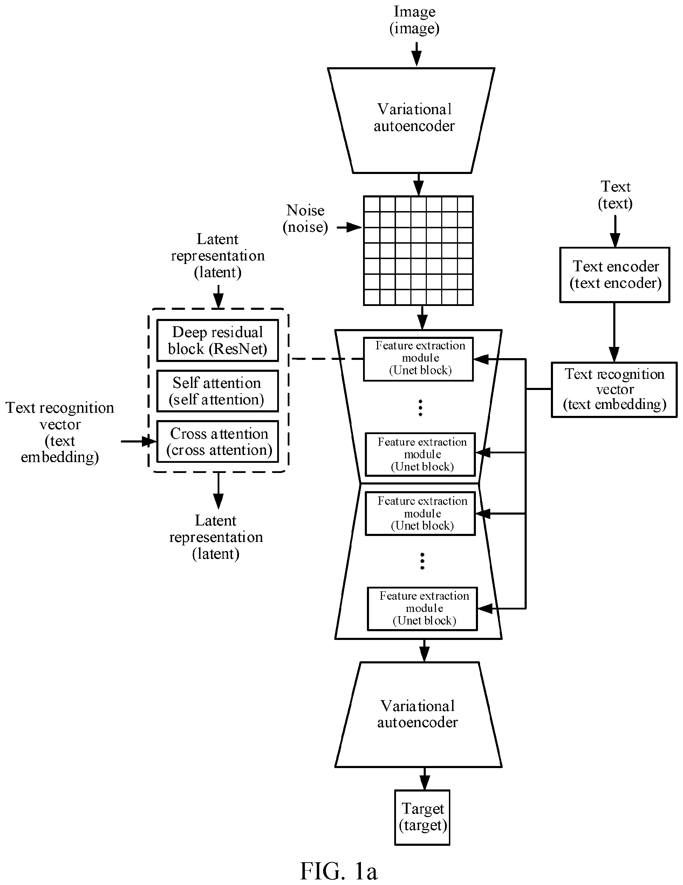

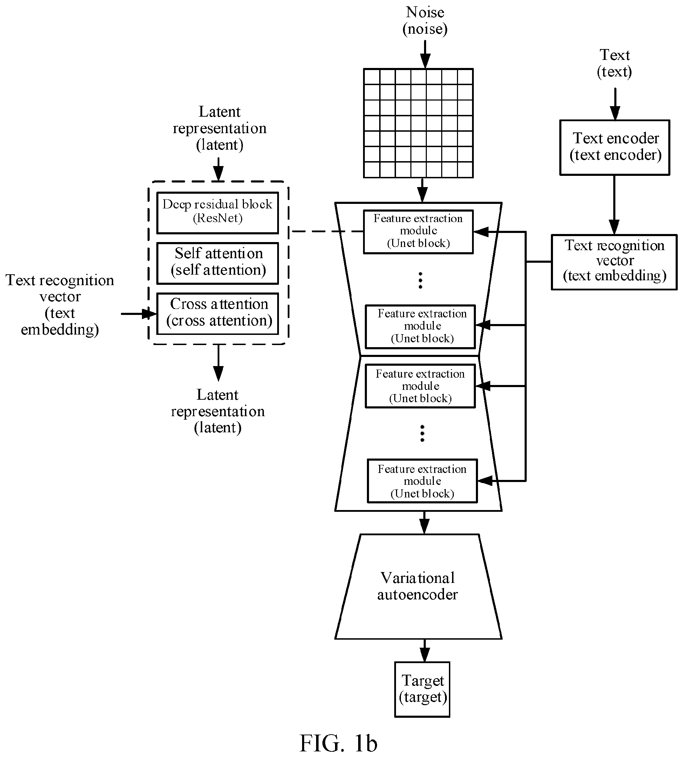

For the basic framework of training of the Stable Diffusion model, reference may be made to FIG. 1a, and for the basic framework of inference of the Stable Diffusion model, reference may be made to FIG. 1b. As can be seen from FIG. 1a and FIG. 1b, both the basic framework of training and the basic framework of inference of the Stable Diffusion model include the following three parts: a variational autoencoder, a U-Net network, and a text encoder.
1. The variational autoencoder includes two parts, namely an encoder part and a decoder part. The encoder part of the variational autoencoder may be referred to as a vae encoder, and the decoder part of the variational autoencoder may be referred to as a vae decoder.

The vae encoder can convert a reference image into a form of latent representations in a low-dimensional latent space (usage of the variational autoencoder in a conventional Stable Diffusion model: only in the model training stage of the Stable Diffusion model, the vae encoder is used to encode the sample image, and in the model inference stage, the vae encoder is not used), and the latent representations serve as input data of the U-Net network. The operation of the vae decoder is the reverse of the operation of the vae encoder. The vae decoder converts the latent representations in the latent space back to a high-dimensional image (that is, a video frame). The latent representation (latent) refer to a low-dimensional vector learned from the reference image, and the low-dimensional vector is a representation form of an intrinsic and implicit feature in the reference image. In the Stable Diffusion model, the latent representation usually refers to a latent variable, that is, a variable that is not directly observed in the Stable Diffusion model, and may be understood as the most basic feature in the whole model processing procedure. In the Stable Diffusion model, latent variables may represent unobserved factors, such as features, behaviors, styles, and compositions of an individual, and these factors may affect the diffusion process. An information space in which the latent representations are located is referred to as a latent space. The latent space, i.e., the latent space mentioned above, is a low-dimensional vector space. A latent representation in this space represents a highly summarized or compressed form of image features in the reference image. The summarization or compression is performed by using the vae encoder, that is, the vae encoder maps the reference image into the latent space to obtain latent representations of image features of the reference image, so as to uncover more comprehensive, deeper, and more implicit features in the reference image.

### 2. U-Net network:

The U-Net network, also referred to as a Unet network, is an algorithm for performing semantic segmentation by using a fully convolutional network (FCN). The algorithm includes a symmetrical U-shaped structure including a contracting path and an expansive path. The Unet network includes an encoder part (denoted as down sample) and a decoder part (denoted as up sample). The encoder part is used for contracting the reference image into a low-resolution image, and the decoder part is used for decoding the low-resolution image back into a high-resolution image. The Unet network further includes skip connections. A skip connection part is a structure located between the encoder part and the decoder part, that fuses features of different scales in a skip connection mode, thereby improving segmentation accuracy. As can be seen, the Unet network includes three parts, namely, a downsampling part, the skip connection part, and an upsampling part. The composition of each of the three parts is the same, but the trend of feature size dimension is different. Each part includes a plurality of levels of feature extraction modules (denoted as Unet blocks), and each feature extraction module includes a deep residual block (denoted as ResNet) and an attention block. The deep residual block can introduce residual connections to resolve problems such as gradient explosion and gradient vanishing in the model training process. The attention block includes cross attention (denoted as cross attention), and is used for adjusting an output of the content description text inputted into the model. The attention block further includes self attention (denoted as self attention), and is configured for improving the quality of the video frame generated by the Unet network. The self attention is located between the deep residual block and the cross attention.

The skip connection part is configured for preventing the Unet network from losing important information during downsampling by the encoder. The skip connection part is usually added between downsampling ResNet of the encoder and upsampling ResNet of the decoder. In addition, the cross attention mechanism is usually used for processing associations between a plurality of input sequences, so as to capture important information interactions between different sequences in the model. In the Stable Diffusion model, the cross attention can help the model to better understand associations between different parts, so as to more accurately predict changes and influences during the diffusion process. The self attention mechanism is an important supplementary part in the Unet block of the Stable Diffusion model. The input of the self attention mechanism is main features (that is, latent representations (latent)) of the Stable Diffusion model. The self attention functions to further fuse all semantic representations in the main feature, so as to make the expression of the generated content clearer and improve denoising capability of the Unet network to the main features.

As can be seen from FIG. 1a and FIG. 1b, in the training process of the Stable Diffusion model, after noise is added to the reference image by the vae encoder by means of encoding, a new latent representation (latent) is generated. The latent representation (latent) is inputted into the Unet network for operations such as denoising. A latent signal outputted by the Unet network is inputted into the vae decoder for decoding to generate a frame sequence. In the inference process of the Stable Diffusion model, because there is no training image, the purpose of the Stable Diffusion model is to generate specific vivid content images according to the desired video content. Therefore, input data of the Stable Diffusion model is the latent representation (latent) that is pure noise, and there is no need for encoding by using the vae encoder. In this way, after the latent representation (latent) that is pure noise is inputted into the Unet network for processing such as denoising, the vae decoder decodes the latent signal outputted by the Unet network, so that images of the desired video content (in the basic diffusion model, the desired video content is described by a text) can be generated.

### 3. Text encoder:

The text encoder converts an inputted conceptual text sequence into an embedding space that the Unet network can understand. The embedding vector space refers to a text recognition vector (denoted as text embedding). In the embodiments of this application, the use of a text encoder module in a clip model as the text encoder is supported. The text encoder module is a simple transformer-based encoder (a deep learning model based on the self attention mechanism). To compute good semantic representations of a conceptual text, the text encoder module maps a token sequence to a latent text embedding sequence, thereby obtaining a better expected output. The clip model is an advanced deep learning model that can understand texts and images. The clip model is specifically a multi-modality model. By training the multi-modality model, a text can be matched with an image, and recognition of the content in the image and the language describing the image can be learned. In the training process, the clip model learns to encode an image and a text into a unified vector space, so that the clip model can understand the relationship between the image and the text in language and visual terms. Specifically, comparison learning is performed to learn to match an image and a text, so as to train the clip model to predict which image belongs to a given text or which text belongs to a given image. Therefore, the clip model can be used for recognizing elements such as an object, a scenario, and an action in an image, and also can understand the text related to the image, such as a tag, a description, and a title.

### (2) spatio-temporal attention module:

The spatiotemporal attention module is referred to as a motion module, and is configured for improving a video generation function provided by the Stable Diffusion model. The main function of the spatio-temporal attention module is to compute a correlation between frames in a frame sequence in a video generation and training process performed by the Stable Diffusion model, that is, to compute a correlation between image contents of two adjacent video frames, so as to smoothly generate a content difference between frames.

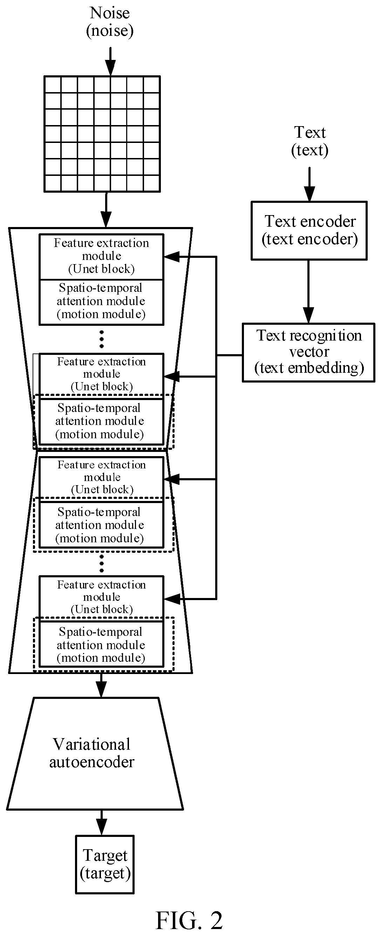

Based on the foregoing descriptions about the basic diffusion model (Stable Diffusion) and the spatio-temporal attention module (motion module), the embodiment of this application supports embedding the spatio-temporal attention module into the Stable Diffusion model, specifically, embedding the spatio-temporal attention module into the plurality of levels of feature extraction modules of the Unet network in the Stable Diffusion model. For a schematic diagram of a model structure of a video generation model obtained by embedding the spatio-temporal attention module into the Stable Diffusion model, reference may be made to FIG. 2. As shown in FIG. 2, the mode of adding the motion module to the Stable Diffusion model includes: embedding one motion module into the feature extraction module at each level in the plurality of levels of feature extraction modules of the Stable Diffusion model, that is, embedding one motion module after each Unet block in the Stable Diffusion model, to form the video generation model. In this way, in the process of the video generation model generating a frame sequence at one time, after the feature extraction module (Unet block module) performs processing such as denoising on the latent representation, prediction processing may be performed, by using the spatio-temporal attention module embedded in the feature extraction module, on output information (that is, the latent representation) outputted by the corresponding feature extraction module to obtain a prediction result. The prediction result is used for indicating a content correlation between the image contents of two adjacent video frames when the frame sequence is generated based on the output information outputted by a corresponding feature extraction module. If the content correlation is excessively high, it indicates that the contents of adjacent frames are discontinuous and are not smooth enough. In this case, the content changes may be properly moderated during subsequent processing such as denoising, to ensure smooth contents of adjacent frames. As can be seen, by embedding the spatio-temporal attention module into the feature extraction module, the content correlation between video frames can be effectively computed, so that the video frames can be optimized subsequently based on the content correlation, thereby avoiding problems such as poor video effect resulting from excessive content jumps between video frames. For functions of modules in the model structure of the video generation model shown in FIG. 2, reference may be made to related descriptions of FIG. 1a and FIG. 1b above, and details are not described herein again.

Further, considering that the embodiment of this application introduces the reference image for guiding content generation in the model inference stage, to embed the features of the reference image in the model inference process, the embodiment of this application further fine-tunes the video generation model shown in FIG. 2 according to different feature embedding mechanisms for the reference image, so as to adaptively embed the features of the reference image in the model inference stage. In addition, according to different feature embedding mechanisms for the reference image, system architectures for implementing an image-to-video generation solution based on the video generation model are different. The following describes the feature embedding mechanism for the reference image, fine tuning of the video generation model by adapting to the feature embedding mechanism, and a corresponding system architecture.
(1) The feature embedding mechanism is a latent space embedding mechanism.

The principle of the latent space embedding mechanism is: the features of the reference image are embedded into N latent space noise initialization features used during generation of the frame sequence. Each of the N latent space noise initialization features is obtained by adding random noise to a blank latent space reference feature, which may be understood as a process of adding random noise to a blank image.

Because the feature of the reference image is embedded into the latent space noise initialization feature used during sequence generation, there is no need to change an internal structure of the video generation model. Therefore, when the feature embedding mechanism is the latent space embedding mechanism, a model structure of a corresponding video generation model is the same as a model structure of the video generation model shown in FIG. 2, thereby avoiding cost overheads caused by model structure adjustment.

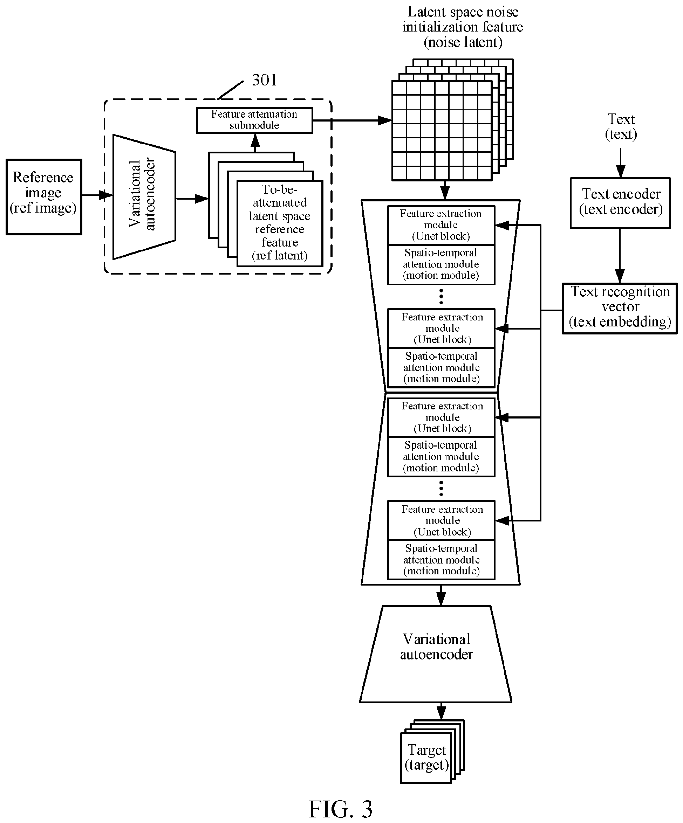

When the feature embedding mechanism is the latent space embedding mechanism, for the system architecture of the image processing system, reference may be made to FIG. 3. As shown in FIG. 3, the image processing system includes at least a video generation model, input data of the video generation model (that is, the N latent space noise initialization features used during generation of the frame sequence), and a first image processing module 301. The first image processing module 301 includes a vae encoder inherent to the Stable Diffusion model and a feature attenuation submodule. The vae encoder performs image encoding on the reference image to map the reference image to the latent space, so as to obtain N to-be-attenuated latent space reference features used for representing the image features in the latent space. Feature attenuation processing is performed on the N to-be-attenuated latent space reference features by using the feature attenuation submodule to obtain N attenuated latent space reference features. The N attenuated latent space reference features are embedded into the N latent space noise initialization features to obtain N latent space target features. After the N latent space target features are inputted into the video generation model, the video generation model may perform processing such as denoising based on the N latent space target features and a content description text, and then perform decoding by using the vae decoder, so as to generate a target video at one time based on the reference image and the content description text.

As a result, this latent space embedding mechanism can directly transfer the content information or features of the reference image to each latent space noise initialization feature used during generation of the frame sequence, which is similar to an image generation process of directly transferring the content information/features of the reference image to the N video frames, thereby effectively ensuring content consistency between the image content of each video frame in the finally generated target video and the image content of the reference image. In addition, the feature attenuation submodule is deployed in the first image processing module. In this way, feature attenuation processing can be performed, by using the feature attenuation submodule, on the N to-be-attenuated latent space reference features extracted based on the reference image, thereby ensuring the content difference between the image content of each video frame and the image content of the reference image. Further, the difference point of the content difference between the image contents of the video frames is specifically described by the content description text inputted into the video generation model, to ensure that the entire video content of the generated target video meets the video generation requirement, thereby improving the video quality of the target video.

(2) The feature embedding mechanism is a multi-level cross attention embedding mechanism.

The principle of the multi-level cross attention embedding mechanism is: the features of the reference image are embedded into a feature extraction module at each level in the Unet network in the video generation model, specifically, into a cross attention mechanism of the feature frame extraction module at each level.

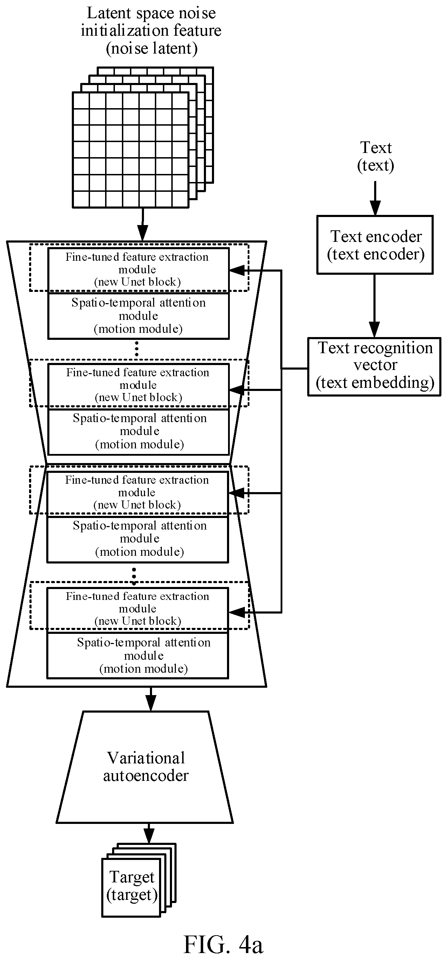

Because the features of the reference image are embedded inside the video generation model, a module structure of the feature extraction module in the video generation model needs to be fine-tuned, so that the fine-tuned feature extraction module can receive the features of the reference image and process the features. Exemplarily, for the schematic diagram of the model structure of the video generation model after the feature extraction module in the video generation model is fine-tuned, reference may be made to FIG. 4a. As shown in FIG. 4a, a cross attention layer is added to the feature extraction module at each level in the Unet network, so that the original cross attention layer in the feature extraction module is configured to perform an attention operation on the content description text, and the new cross attention layer is configured to perform an attention operation on the features of the reference image embedded into the feature extraction module.

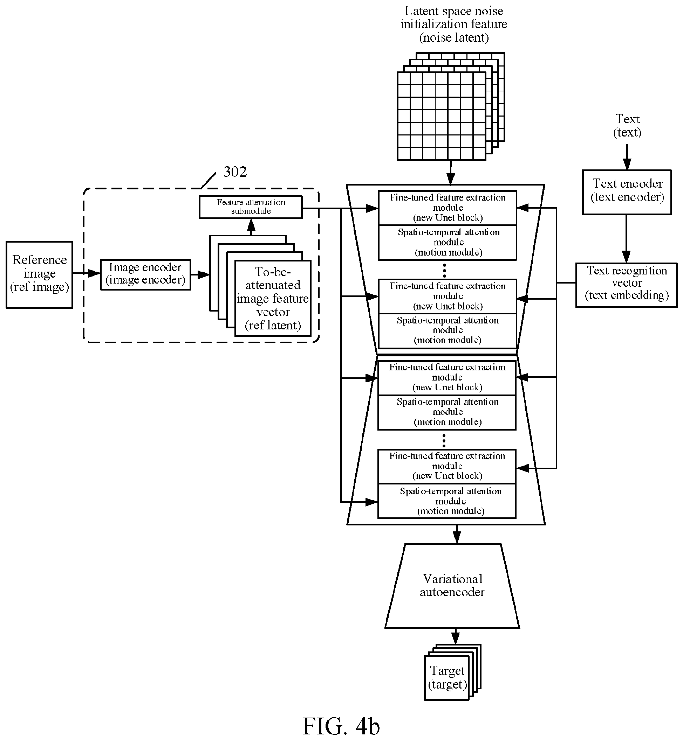

When the feature embedding mechanism is the multi-level cross attention embedding mechanism, for the system architecture of the image processing system, reference may be made to FIG. 4b. As shown in FIG. 4b, the image processing system includes at least a video generation model, input data of the video generation model (that is, the N latent space noise initialization features used during generation of the frame sequence), and a second image processing module 302. The second image processing module 302 includes a brand new image encoder (denoted as image encoder) and a feature attenuation submodule that are provided in an embodiment of this application. The image encoder can encode the reference image into specified N to-be-attenuated image feature vectors (embeddings), and then use the N to-be-attenuated image feature vectors in cross attention computation in the feature extraction module at each level in the Unet network, so that so that the content information of the reference image can be incorporated when the video generation model is invoked to perform the video generation process.

As a result, this multi-level cross attention embedding mechanism can transfer content information or features of the reference image to the video generation process by the video generation model, thereby effectively ensuring content consistency between the image content of each video frame in the finally generated target video and the image content of the reference image. In addition, the feature attenuation submodule is deployed in the first image processing module. In this way, feature attenuation processing can be performed, by using the feature attenuation submodule, on the N to-be-attenuated image feature vectors extracted based on the reference image, thereby ensuring the content difference between the image content of each video frame and the image content of the reference image. Further, the difference point of the content difference between the image contents of the video frames is specifically described by the content description text inputted into the video generation model, to ensure that the entire video content of the generated target video meets the video generation requirement, thereby improving the video quality of the target video.

(3) The feature embedding mechanism is a dual-stream consistency embedding mechanism (or referred to as a dual-stream embedding mechanism). The dual-stream consistency embedding mechanism includes both a latent space embedding mechanism and a multi-level cross attention embedding mechanism.

The dual-stream consistency embedding mechanism refers to embedding the features of the reference image in the frame sequence generation process in the model inference stage by using both the latent space embedding mechanism and the multi-level cross attention embedding mechanism. For related content about the latent space embedding mechanism and the multi-level cross attention embedding mechanism, reference may be made to the foregoing related descriptions, and details are not described herein again.

Considering that the dual-stream consistency embedding mechanism includes the multi-level cross attention embedding mechanism, a structure of the video generation model shown in FIG. 2 needs to be fine-tuned. For a schematic structural diagram of the fine-tuned video generation model, reference may be made to FIG. 4a above. The model structure of the fine-tuned video generation model is not described herein again.

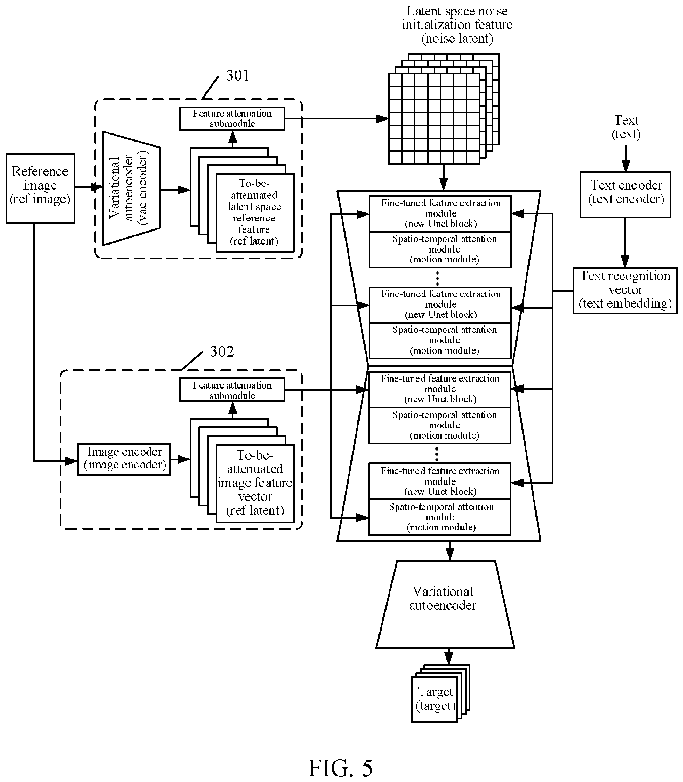

When the feature embedding mechanism is the dual-stream consistency embedding mechanism, for the system architecture of the image processing system, reference may be made to FIG. 5. As shown in FIG. 5, the image processing system includes at least a video generation model, input data of the video generation model (that is, the N latent space noise initialization features used during generation of the frame sequence), a first image processing module 301, and a second image processing module 302. For related content about the composition and the principle of the first image processing module 301, reference may be made to the related description of the foregoing embodiment shown in FIG. 3. Similarly, for related content about the composition and the principle of the second image processing module 302, reference may be made to the related description of the foregoing embodiment shown in FIG. 4b. Details are not described herein again.

As can be seen, the innovative dual-stream consistency embedding mechanism designed in the embodiments of this application includes two parts, namely the latent space embedding mechanism and the multi-level cross attention embedding mechanism. The two embedding mechanisms can provide the feature (or referred to as designated information/consistency information for guiding generation of the video content) extracted from the reference image provided for the video generation model to the latent space noise initialization features (that is, to generate a latent space initially made) used during generation of the frame sequence, and to the feature extraction module at each level of the Unet network in the video generation model, respectively. In this way, the video generation model can not only perceive the image content of the reference image from the dimension of the input data, but also perceive the image content of the reference image in the video generation process. Such a design that enables the video generation model to sufficiently perceive the main content information of the reference image can effectively ensure that the image content of each video frame in the generated video frame sequence is highly consistent with the image content of the currently provided reference image, so that the image content of the entire video frame sequence is more coherent without abrupt changes in the content.

For ease of description, the image processing solution provided in the embodiments of this application is described in detail below in an example in which the feature embedding mechanism is the dual-stream consistency embedding mechanism.

In an actual application, the image processing system involved in the embodiments of this application may be deployed in a single computer device, or may be distributed across a plurality of computer devices. In this way, after receiving the reference image and the content description text, the computer device may invoke the image processing system to convert the reference image into the target video based on the reference image and the content description text by using the image processing solution. Specifically, the image processing system may be directly deployed in the computer device, or may be deployed in an application running in the computer device. The application may be a computer program implementing one or more specific tasks. Applications are classified according to different dimensions (such as running modes and functions of the applications), and types of the same application in different dimensions can be obtained. For example, as classified according to running modes of the applications, the applications may include, but are not limited to, a client installed in a terminal, a mini program (as a subprogram of the client) that can be used without being downloaded and installed, a World Wide Web (Web) application accessed through a browser, and the like. In another example, as classified according to function types of the applications, the applications may include, but are not limited to, an Instant Messaging (IM) application, a content interaction application, and the like. The instant messaging application refers to an application that instantly exchanges messages and performs social interaction based on the Internet. The instant messaging application may include, but is not limited to, a social application that includes a communication function, a map application that includes a social interaction function, a game application, and the like. The content interaction application is an application that can implement content interaction. For example, the content interaction application may be an application of a sharing platform, personal space, news, videos, an application store, or the like.

The computer device may include a terminal and a server. The terminal may include, but is not limited to, a device such as a smartphone (for example, a smartphone deployed with an Android system or a smartphone deployed with an Internetworking Operating System (IOS)), a tablet computer, a portable personal computer, an in-vehicle device, a head-mounted device, a smart TV, a smart home, or the like. The type of the terminal is not limited in the embodiments of this application. Details are described herein. The server is a backend server corresponding to the terminal, and is configured to interact with the terminal to provide computation and application service support for the applications deployed in the terminal. The server may be an independent physical server, or a server cluster or a distributed system including a plurality of physical servers, or may alternatively be a cloud server that provides basic cloud computing services, such as cloud service, cloud database, cloud computing, cloud function, cloud storage, network service, cloud communication, middleware service, domain name service, security service, content delivery network (CDN), and big data and artificial intelligence platform.

Further, the image processing solution provided in the embodiments of this application may be applicable to any application scenario that needs image-to-video conversion. In an application scenario, for a task of generating a video with a video content desired by a user, a specified reference image is inputted, and then an entire video frame sequence is generated. A subject of image content of each video frame in the video frame sequence keeps consistent with a subject of image content of the reference image. In addition, by means of control of a feature attenuation mechanism, presentation forms of the subject of the image content of each video frame can vary from presentation forms of the subject of the image content of the reference image to some extent, thereby ensuring diverse changes in the entire video content of the video frame sequence. Exemplarily, the application scenario may include, but is not limited to, a game application scenario, a camera application scenario, and a dynamic meme generation scenario (such as a graphics interchange format (gif) meme generation scenario). The following briefly describes the process of implementing the image processing solution in several exemplary application scenarios.

The application scenario is a game application scenario, specifically, a game promotion material production scenario. In the game promotion material production scenario, a game promotion image usually needs to be converted into a game promotion video (for example, a game video in which game characters in the game promotion image move slightly), so as to better promote the game by using the game promotion video. In this case, the computer device in which the image processing system is deployed may be a server of the game developer side. A game developer may input a reference image of a game scenario or a reference image including game characters into the server, so that after receiving the reference image, the image processing system deployed in the server performs image processing (such as image encoding, copying, and feature attenuation processing) on the reference image by using the first image processing module and/or the second image processing module, to obtain N attenuated encoded image features. In this way, by embedding the N attenuated encoded image features into a model inference stage of a video generation model (for example, embedded into N latent space noise initialization features used during generation of the frame sequence or into the feature extraction module at each level in the Unet network), a target video can be generated based on the reference image. The target video has a highly consistent content, for example, in terms of the game style and scenario characters, and can have diverse game scenarios or slight movements of game characters. In addition, according to different intensities of attenuation during feature attenuation processing, a change speed of the video content in the generated target video can be controlled, thereby producing the target video with diverse content changes for the game promotion material.

The application scenario is a camera application scenario, specifically, an application scenario of converting a camera image into a video. In this application scenario, the user may need to convert a captured image or an image downloaded from the network into a video. In this case, the computer device is a terminal held by the user, and a camera application runs in the terminal. The image processing solution provided in the embodiments of this application is deployed in the camera application. Thereby, after using the camera application in the terminal to capture a reference image (or uploads a reference image by using the camera application), the user may choose to generate a dynamic live video (that is, a video stream transmitted in real time) based on the reference image. In this case, the camera application inputs the reference image into the image processing system, so that the image processing system converts the reference image according to the image processing solution provided in the embodiments of this application, to obtain the target video. The image content of each video frame in the target video and the image content of the reference image have content consistency and a content difference, thereby improving the user experience of using the camera application, and making the camera application more entertaining.

The application scenario is a dynamic meme generation scenario. A dynamic meme is a gif animation with a person having slightly changing facial expressions. In this case, the computer device may be a terminal held by the user, or may be a server held by a dynamic meme developer, or the like. Taking a computer device as the terminal, in which an application for making memes is deployed, the user may upload a reference image to the application. For example, the reference image is a rage comic or a composite picture featuring a famous scene from a movie or TV show. Thereby, the application inputs the reference image to the image processing system, so as to convert the reference image into a target video by using the image processing solution. In this case, the target video is a dynamic meme. The image content of each video frame in the dynamic meme is a person from the reference image, and the dynamic effect across a plurality of video frames is that the person performs slight movements slight movements.

The foregoing three application scenarios are examples of application scenarios to which the image processing solution provided in the embodiments of this application is applicable, and do not limit the application scenarios to which the image processing solution is applicable.

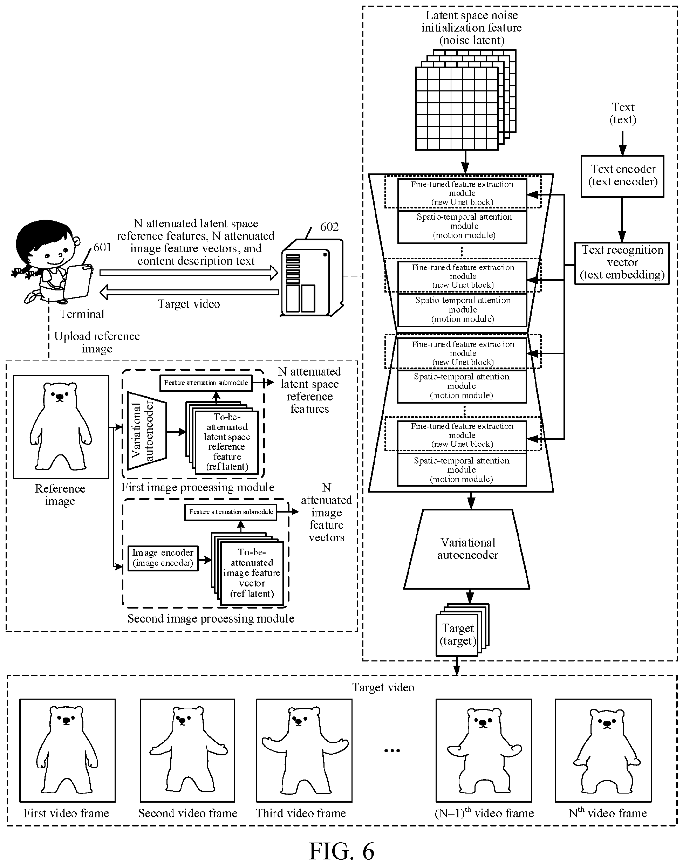

For ease of understanding the application scenarios to which the image processing solution is applicable, the following exemplarily describes, with reference to FIG. 6, an application scenario to which the image processing solution is applicable. As shown in FIG. 6, the image processing system includes a terminal 601 and a server 602. Quantities and names of terminals and servers are not limited in the embodiment of this application. The terminal 601 and the server 602 may be connected directly or indirectly in a wired or wireless mode. The communication mode between devices is not limited in the embodiment of this application. For example, the communication mode between devices may include, but is not limited to, use of an HTTP request, remote procedure call (RemoteProcedureCall), socket, and content sharing.

The image processing solution provided in the embodiments of this application may be performed by a computer device, in which the video generation model trained in the model training stage in the embodiments of this application, and the first image processing module and/or the second image processing module that cooperate with the video generation model to implement the image processing solution are mounted. The computer device may be the terminal 601 and/or the server 602 in the system shown in FIG. 6. That is, the embodiment of this application supports performing the image processing solution by either of the terminal 601 and the server 602 or both of the terminal 601 and the server 602. An image-to-video application scenario to which the image processing solution is applicable is described below in an example in which the image processing solution is performed by both the terminal 601 and the server 602, the first image processing module and the second image processing module are deployed in the terminal 601, and the video generation model is deployed in the server 602.

During specific implementation, the user may upload or capture a reference image by using the terminal 601, and set a content description text. The content description text is used for describing the video content of the target video that the user intends to generate based on the reference image. If the content description text is "a bear making setting-up exercises", then the subject "bear" in the target video that the user intends to generate based on the reference image can make setting-up exercises. After receiving the reference image, the terminal 601 performs image encoding processing and feature attenuation processing on the reference image by using the first image processing module to obtain N attenuated latent space reference features, and at the same time, performs image encoding processing and feature attenuation processing on the reference image by using the second image processing module to obtain N attenuated image feature vectors. The terminal 601 transmits the N attenuated latent space reference features, the N attenuated image feature vectors, and the content description text to the server 602. After receiving the N attenuated latent space reference features, the N attenuated image feature vectors, and the content description text, the server 602 embeds the N attenuated latent space reference features into N latent space noise initialization features used during generation of the frame sequence to obtain N latent space target features, and performs text recognition processing on the content description text to obtain a text recognition vector. In this way, in the image-to-video process by using the text recognition vector and the N latent space target features, the server 602 also embeds the N attenuated encoded image feature vectors into the feature extraction module at each level in the Unet network of the video generation model, to finally obtain the target video. The subject of the image content of each video frame in the target video is "bear". This subject is consistent with the subject "bear" of the image content of the reference image. The difference lies in presentation forms of the "bear" in the target video. For example, a posture and an expression are consistent with the content description text, and are different from the presentation forms of the "bear" in the image content of the reference image. To facilitate the user in acquiring the converted target video in time, the server 602 further returns the generated target video to the terminal 601, so that the user can perform operations such as browsing, copying, downloading, and forwarding on the target video from the terminal 601.

Based on the foregoing brief description of the image processing solution and application architecture provided in the embodiments of this application, the following further need to be described:
1. The application architecture shown in FIG. 6 mentioned above in the embodiments of this application is intended to describe the technical solutions in the embodiments of this application more clearly, and does not constitute a limitation on the technical solutions provided in the embodiments of this application. A person skilled in the art may learn that, with the evolution of the system architecture and the emergence of a new business scene, the technical solutions provided in the embodiments of this application are also applicable to similar technical problems. That is, the schematic diagram of the image-to-video application architecture shown in FIG. 6 is an exemplary schematic architecture diagram. In an actual application, a quantity and distribution of devices (such as terminals and servers) included in the architecture may vary. The schematic architecture diagram of the image-to-video application architecture is not limited in the embodiments of this application. All the embodiments described in this application can be freely combined to obtain further embodiments unless they are technically mutually exclusive. Such combined embodiments are to be considered as specifically recorded in this application.
2. The solution flow of the image processing solution is described above in an example in which the first image processing module and the second image processing module are deployed in the terminal 601 and the trained video generation model is deployed in the server 602. In an actual application, according to different deployment positions of the first image processing module, the second image processing module, and the video generation model, the solution flow of implementing the image processing solution by the architecture shown in FIG. 6 varies. For example, the first image processing module, the second image processing module, and the video generation model are all deployed in the server. Then, after receiving the reference image and the content description text that are uploaded by the user, the terminal 601 may directly transmit the reference image and the content description text to the server 602. The server 602 performs operations such as image encoding and feature attenuation processing on the reference image by using the first image processing module and the second image processing module. For another example, when only one feature embedding mechanism is used, the terminal 601 or the server 602 may include either the first image processing module or the second image processing module.
3. Collection and processing of relevant data in the embodiments of this application need to strictly comply with the requirements of relevant laws and regulations. Acquisition of personal information needs to be subject to the knowledge or consent of a personal subject (or the legal basis for acquiring the information), and subsequent use and processing of data is carried out within the scope of authorization of laws and regulations and the subject of the personal information. For example, when the embodiments of this application are applied to a specific product or technology, for example, when a reference image is being uploaded, permission or consent needs to be obtained from the user who holds the rights to use the reference image, and collection, use, and processing of the relevant data need (such as the conversion of the reference image) to comply with relevant laws, regulations, and standards of relevant regions.

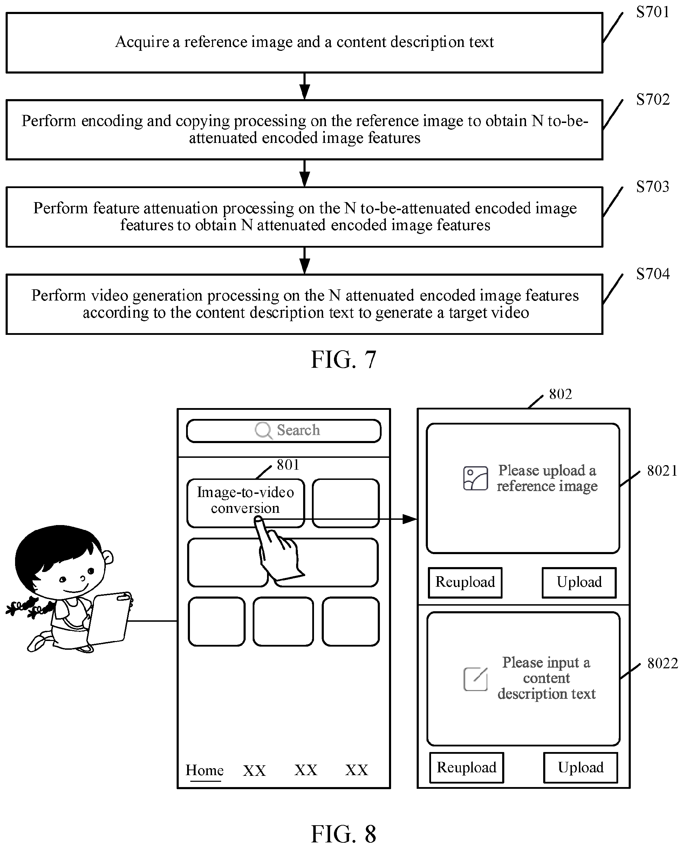

Referring to FIG. 7, FIG. 7 is a schematic flowchart of an image processing method according to an exemplary embodiment of this application. The schematic flowchart mainly shows, from the perspective of model inference, a specific implementation process of image-to-video conversion by using a video generation model and a first image processing module. The method process shown in FIG. 7 may be performed by the computer device described above, and is described in an example in which the computer device is the terminal 601 shown in FIG. 6. The image processing method may include, but not limited to, operations S701 to S704. It should be understood that the various embodiments described in this specification are not mutually exclusive, and that features, structures, or characteristics described in connection with one embodiment may be combined, in whole or in part, with features, structures, or characteristics of one or more other embodiments described herein, unless such combination would result in a technical conflict or contradiction, or would render the resulting embodiment inoperative for its intended purpose. Accordingly, any embodiment disclosed herein may be practiced in combination with any other embodiment, or portion thereof, disclosed herein, to the extent such combination is technically feasible and consistent with the teachings of the present disclosure.

S701: Acquire a reference image and a content description text.

As described above, the reference image is denoted as ref image in an embodiment of this application, and refers to a picture whose reference image content is used as a base content of a video content of a target video to be generated. By introducing the reference image to a video generation process, the reference image content may be used to guide generation of image content of each video frame in a frame sequence, so that a subject (for example, a main character and environment) of the image content of each video frame in the generated target video is consistent with a subject of the reference image content. That is, the reference image content and the image content of each video frame in the frame sequence have content consistency. Similarly, the content description text is a character string for describing video content to be included in the target video to be generated. By introducing the content description text in the video generation process, the content description text may be used to guide content details of the image content of each video frame in the target video, for example, content details of the image content of the video frame or a content trend of the video content of the entire frame sequence. The reference image and the content description text are both used for generating the same target video. Therefore, it is required to ensure no semantic conflict between the image content of the reference image and image content described in the content description text. That is, subject content of the image content described in the content description text needs to be consistent with subject content of the image content of the reference image. For example, if the subject content of the reference image is a standing bear and the content description text is "dancing girl", then there is a semantic conflict between the subject "bear" of the reference image and the subject "girl" of the image content described in the content description text.

It can be seen that in the process of generating the target video by using the reference image and the content description text, the reference image functions to ensure content consistency between the subject content of each video frame in the generated target video and the image content of the reference image, and the content description text functions to ensure that presentation forms and the like of the subject content of each video frame in the generated target video match the image content described in the content description text. This can effectively ensure that each video frame in the target video is generated by using the image content of the reference image as the base content, and the content description text can be used to guide generation of the image content of each video frame in the target video having a content difference from the image content of the reference image, thereby ensuring that changes of the entire video content of the target video match the image content described in the content description text.

According to different application scenarios of the image processing method provided in the embodiments of this application, providers providing the reference image and the content description text are different. For example, the providers may be users, developers, or the like, and there may be one or more providers. For example, assuming that the image processing method is applied to a camera application scenario. In this scenario, if a user needs to convert an image into a video, then the user needs to upload a reference image and input a content description text by using a computer device. Exemplarily, the camera application scenario is provided by camera software deployed in the terminal. As shown in FIG. 8, a page in the camera software may be provided with an image-to-video button, such as a button 801. When the button 801 is triggered, an upload page 802 is displayed. The upload page 802 includes an image upload area 8021 and a text upload area 8022. In this case, the user may upload a historically captured or network-downloaded image in the image upload area 8021 as a reference image, and manually input or copy and paste a text into the text upload area 8022 as a content description text. Sources and acquisition modes of the reference image and the content description text are not limited in this embodiment of this application. Details are described herein.

S702: Perform encoding and copying processing on the reference image to obtain N to-be-attenuated encoded image features.

To guide generation of the image contents of N video frames in the target video by using the image content of the reference image, in an embodiment of this application, after the reference image is acquired, encoding and copying processing is performed on the reference image, to obtain N to-be-attenuated encoded image features extracted from the reference image. The N to-be-attenuated encoded image features are the same, and any to-be-attenuated encoded image feature may be understood as an image feature (such as a color feature, a texture feature, a shape feature, and a spatial relationship feature) of the reference image, and may be used for representing a content characteristic of the reference image content of the reference image.

During specific implementation, after the reference image is acquired, image encoding processing is first performed on the reference image to obtain a to-be-attenuated encoded image feature, aiming to extract, from the reference image, the to-be-attenuated encoded image feature representing the content feature or content characteristics of the image content of the reference image. Then, considering that the target video to be generated is a frame sequence including N video frames, to facilitate guiding the generation of the image content of each video frame based on the image content of the reference image, the to-be-attenuated encoded image feature further need to be copied N times to obtain the N to-be-attenuated encoded image features. For example, the to-be-attenuated encoded image feature is replicated into N copies, to obtain the N to-be-attenuated encoded image features.

As described above, the embodiments of this application provide two feature embedding mechanisms, namely the latent space embedding mechanism and the multi-level cross attention embedding mechanism. Different feature embedding mechanisms correspond to different to-be-attenuated encoded image features. That is, different feature embedding mechanisms need to use different image encoding processing modes to perform image encoding processing on the reference image, to ensure that the to-be-attenuated encoded image features extracted by performing image encoding processing on the reference image can be embedded into the video generation model.

In the embodiments of this application, the image encoding processing modes corresponding to the latent space embedding mechanism are described. When the feature embedding mechanism is the latent space embedding mechanism, the to-be-attenuated encoded image feature corresponding to the latent space embedding mechanism may be referred to as a to-be-attenuated latent space reference feature. The to-be-attenuated latent space reference feature may be denoted as ref latent or ref feature. When the feature embedding mechanism is the latent space embedding mechanism, for the schematic diagram of the system framework provided in the embodiments of this application, reference may be made to FIG. 3 described above. As shown in FIG. 3, the first image processing module 301 included in the system framework includes the encoder part, that is, the vae encoder, in the variational autoencoder inherent to the video generation model (Stable Diffusion model). In this case, the variational autoencoder inherent to the video generation model may be used to perform image encoding processing on the reference image, to encode the reference image into the to-be-attenuated latent space reference feature required by the video generation model. The principle of performing image encoding processing on the reference image by the variational autoencoder may include: The variational autoencoder receives an inputted reference image and extracts an image feature of the reference image by using a series of convolutional layers or another feature extraction algorithm. The image feature may be used for representing key information in the reference image. The variational autoencoder then maps the image feature of the reference image to a latent space to obtain a to-be-attenuated latent space reference feature that represents content characteristics of the image content of the reference image in the latent space. By mapping the image feature of the reference image to the latent space, more latent features of the reference image can be learned by using these image features, so as to deepen understanding of the reference image, thereby facilitating subsequently guiding the generation of the video content based on more correct and abundant image features, and improving the quality of the video content.

Further, after the image encoding processing is performed on the reference image by using the variational autoencoder in the system framework shown in FIG. 3 to obtain the to-be-attenuated latent space reference feature, the to-be-attenuated latent space reference feature is directly copied N times to obtain N to-be-attenuated latent space reference features. Each to-be-attenuated latent space reference feature corresponds to one video frame in the target video to be generated, thereby ensuring content consistency between the video content of each video frame in the target video and the image content of the reference image. In addition, after image encoding processing is performed on the reference image to obtain the to-be-attenuated encoded image feature, the N to-be-attenuated encoded image features can be obtained simply by copying the to-be-attenuated encoded image feature, thereby improving generation efficiency of the N to-be-attenuated encoded image features and reducing generation costs.

In the embodiments of this application, the selection of using the variational autoencoder inherent to the video generation model to perform image encoding processing on the reference image is mainly based on the following considerations: (1) as can be seen from the system framework of the Stable Diffusion model shown in FIG. 1a in the model training stage, massive sample data used in the model training stage is obtained by outputting an image to the variational autoencoder, specifically, to the vae encoder, and then adding noise by the vae encoder. Therefore, the embodiments of this application support performing image encoding processing on the reference image by using the vae encoder inherent to the video generation model, so that feature semantics extracted from the reference image can be more applicable to training semantics of the Stable Diffusion model.

(2) Since the feature (that is, the to-be-attenuated latent space reference feature mentioned above, specifically, the attenuated latent space reference feature after feature attenuation processing is performed on the to-be-attenuated latent space reference feature) computed based on the reference image needs to be embedded into the Stable Diffusion model obtained through model training mentioned in (1), specifically embedded into the latent space noise initialization feature (noise latent) used during the generation of the frame sequence by using the Stable Diffusion model, it is required to ensure that a feature size of the to-be-attenuated latent space reference feature extracted from the reference image keeps consistent with a feature size of the latent space noise initialization feature (noise latent). Therefore, in the embodiments of this application, the variational autoencoder trained by the Stable Diffusion model in the model training stage is designed to perform image encoding processing on the reference image, which can ensure that the feature size of the to-be-attenuated latent space reference feature extracted from the reference image keeps consistent with the feature size of the latent space noise initialization feature (noise latent), that is, ensure that a to-be-attenuated latent space reference feature obtained by performing image encoding processing on the reference image in the model inference stage can satisfy a size requirement of the Stable Diffusion model for input data.

(3) It can be known from the foregoing descriptions that, in the model training stage, the Stable Diffusion model trains the vae encoder by using massive images, and therefore, the vae encoder trained by the model is competent to extract main content semantics in the image. Therefore, in the embodiments of this application, the reference image is encoded by using the vae encoder trained by the Stable Diffusion model in the model training stage, so that the main content semantics in the reference image can be extracted more effectively, thereby improving the feature extraction accuracy.

S703: Perform feature attenuation processing on the N to-be-attenuated encoded image features to obtain N attenuated encoded image features.

After image encoding processing is performed on the reference image based on the foregoing description to obtain the N to-be-attenuated encoded image features, if the N same to-be-attenuated encoded image features are directly used to guide the generation of image contents of the N video frames in the target video, the image contents of generated N video frames are the same. For example, N=16. If original consistency information (that is, the to-be-attenuated encoded image features) extracted from the reference image is used in the process of generating 16 video frames, the 16 video frames generated by using the original to-be-attenuated encoded image features are completely the same. However, actually, according to a video playback order, the image contents of adjacent video frames in the N video frames of the target video have a content difference, to ensure that the entire video content changes dynamically, for example, the posture of a person changes or a scenario in which the person is located changes.

To flexibly adjust the image contents of the N video frames, the embodiments of this application support performing feature attenuation processing, by using a feature attenuation policy, on the N to-be-attenuated encoded image features extracted from the reference image, and guiding the generation of the N video frames by using the N attenuated encoded image features obtained after feature attenuation. The feature attenuation policy may be understood as a rule for gradually weakening the N same to-be-attenuated encoded image features in terms of a feature dimension. The rule specifically includes one or more rule parameters. In this way, after feature attenuation processing is performed on the N to-be-attenuated encoded image features, the obtained N attenuated encoded image features are different, and the feature differences between the N attenuated encoded image features and the to-be-attenuated encoded image features become increasingly large. Therefore, when the N attenuated encoded image features are used to guide the generation of the N video frames, the content difference between the image contents of the N video frames and the image content of the reference image can be ensured.

The main principle of the feature attenuation policy provided in the embodiments of this application includes: a corresponding attenuation coefficient is set for each of the N video frames first, and feature attenuation processing is performed, by using the attenuation coefficient, on the to-be-attenuated encoded image feature which is referenced in the process of generating the corresponding video frame. Specifically, presetting of an attenuation parameter is supported, and the attenuation parameter is a decimal in the range of (0, 1). Therefore, the smaller the value of the attenuation parameter, the larger the content difference between adjacent video frames, and thus the faster the change speed of the video content of the target video. Therefore, the attenuation parameter may be used for indicating a degree of content difference between the image contents of adjacent video frames in the frame sequence. Then, N attenuation coefficients are computed by using the preset attenuation parameter, where the N attenuation coefficients and the N to-be-attenuated encoded image features are in a one-to-one correspondence with each other. The one-to-one correspondence means that each attenuation coefficient is used as a feature weight of one to-be-attenuated encoded image feature. Finally, the N attenuation coefficients are respectively multiplied by corresponding to-be-attenuated encoded image features to obtain the N attenuated encoded image features.

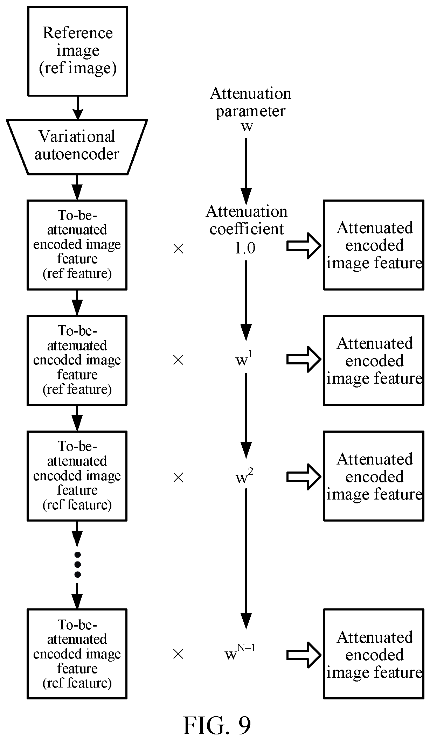

For ease of understanding, the feature attenuation process described above is described in detail below with reference to FIG. 9. As shown in FIG. 9, it is assumed that the attenuation parameter is expressed as w, then by default, the attenuation coefficient corresponding to the first to-be-attenuated encoded image feature in the N to-be-attenuated encoded image features is 1.0, the attenuation coefficient corresponding to the second to-be-attenuated encoded image feature is 1.0 × w (that is, w¹), the attenuation coefficient corresponding to the third to-be-attenuated encoded image feature is 1.0 × w × w (that is, w²), the attenuation coefficient corresponding to the fourth to-be-attenuated encoded image feature is 1.0 × w × w × w (that is, w³), and so on, and the attenuation coefficient corresponding to an N^{th} to-be-attenuated encoded image feature is 1.0 × w^{N-1} (that is, w^{N-1}). Then, the first to-be-attenuated encoded image feature in the N to-be-attenuated encoded image features is multiplied by its corresponding attenuation coefficient 1.0 to obtain a first attenuated encoded image feature. The first attenuated encoded image feature is the same as the first to-be-attenuated encoded image feature. That is, the image content of the first video frame in the N video frames is generated completely according to the image content of the reference image. The second to-be-attenuated encoded image feature by multiplied its corresponding attenuation coefficient w1 to obtain a second attenuated encoded image feature. Because w is a decimal ranging from 0 to 1, the second attenuated encoded image feature is different from the second to-be-attenuated encoded image feature. The second attenuated encoded image feature attenuates content semantic information of the second to-be-attenuated encoded image feature, that is, the image content of the second video frame in the N video frames is generated only according to part of the image content of the reference image. By analogy, the attenuated encoded image feature corresponding to each of the N to-be-attenuated encoded image features is computed.
(1) The specific value of the attenuation parameter is not limited in the embodiments of this application. According to different values of the attenuation parameter, the content change speed between frames is different. For example, the larger the value of the attenuation parameter, the faster the content change speed between frames, that is, the larger the content difference between the image content of the video frame and the image content of the reference image. Accordingly, by controlling the intensity of frame-by-frame attenuation (that is, the value of the attenuation parameter), the content change speed of the video content in the finally generated target video can be effectively controlled, thereby enriching the diverse content changes of the video frame sequence and satisfying the requirement for flexible control on inter-frame content changes in different scenarios.
(2) The computation rule for computing the attenuation coefficient based on the attenuation parameter is not limited in the embodiments of this application. For example, FIG. 9 is described by using an example in which the computation rule is using the power of the attenuation parameter as the attenuation coefficient. In an actual application, the computation rule may further include using the square root of the attenuation parameter as the attenuation coefficient, and the like. For example, it is assumed that the attenuation parameter is a positive number greater than 1, then by default, the attenuation coefficient corresponding to the first to-be-attenuated encoded image feature in the N to-be-attenuated encoded image features is 1.0, the attenuation coefficient corresponding to the second to-be-attenuated encoded image feature is 1.0 × w^{1/2}, the attenuation coefficient corresponding to the third to-be-attenuated encoded image feature is 1.0 × w^{1/2} × w^{1/2}, and the attenuation coefficient corresponding to an N^{th} to-be-attenuated encoded image feature can be deduced by analogy.

S704: Perform video generation processing on the N attenuated encoded image features according to the content description text to generate the target video.

After the N attenuated encoded image features are computed, embedding the N attenuated encoded image features into the video generation process is supported, so that the video content of the target video can be generated by using the image content of the reference image as guiding information, thereby ensuring content consistency between the image content of the reference image and the image content of each video frame in the target video. During specific implementation, the computer device acquires N latent space noise initialization features (noise latent), and the latent space noise initialization features are obtained by adding random noise to a blank latent space reference feature. In short, the latent space noise initialization feature may be simply understood as being obtained by adding random noise to a blank image, so as to process the random noise in the latent space noise initialization feature to draw a video frame. Because one latent space noise initialization feature is used for generating one video frame in the frame sequence, the latent space noise initialization feature needs to be copied to obtain N latent space noise initialization features. Moreover, the computer device invokes a text encoding module (text encoder) to perform text recognition processing on the content description text to obtain a text recognition vector. The text recognition vector is used for representing semantic information of the content description text. Further, a video generation model is invoked to perform video generation processing on the text recognition vector and the N latent space noise initialization features, and the N attenuated encoded image features are embedded during the video generation processing to obtain the target video.

As described above, the embodiments of this application provide two feature embedding mechanisms, namely the latent space feature embedding mechanism and the multi-level cross attention embedding mechanism. In a case where the feature embedding mechanism is the latent space feature embedding mechanism, the following describes, with reference to the system framework shown in FIG. 3, the specific implementation process of invoking a video generation model to perform video generation processing on the text recognition vector and the N latent space noise initialization features, and embedding the N attenuated encoded image features during the video generation processing to obtain the target video. As shown in FIG. 3, the to-be-attenuated encoded image features are denoted as to-be-attenuated latent space reference features, and the attenuated encoded image features are denoted as attenuated latent space reference features. In this case, before the N latent space noise initialization features are inputted into the video generation model, the N attenuated latent space reference features are respectively embedded into corresponding latent space noise initialization features to obtain a latent space reference feature set. The latent space reference feature set includes N latent space target features, and one latent space target feature is obtained by embedding one attenuated latent space reference feature into a corresponding latent space noise initialization feature. That is, the N attenuated latent space reference features are each embedded into a corresponding latent space noise initialization feature in the N latent space noise initialization features to obtain a latent space reference feature set. In this way, when the video generation model is invoked to perform video generation processing on the latent space reference feature set and the text recognition vector, the consistency information of the reference image can be embedded into the process of generating each video frame during the generation of the frame sequence. This ensures that the image content of each video frame in the obtained target video references the reference image content of the reference image, thereby ensuring that the image content of each video frame in the finally generated target video matches the reference image content of the reference image. For example, the subject of the image content of the video frame is the same as that of the reference image content of the reference image. For example, the subject has the same or similar appearance, form, and action.

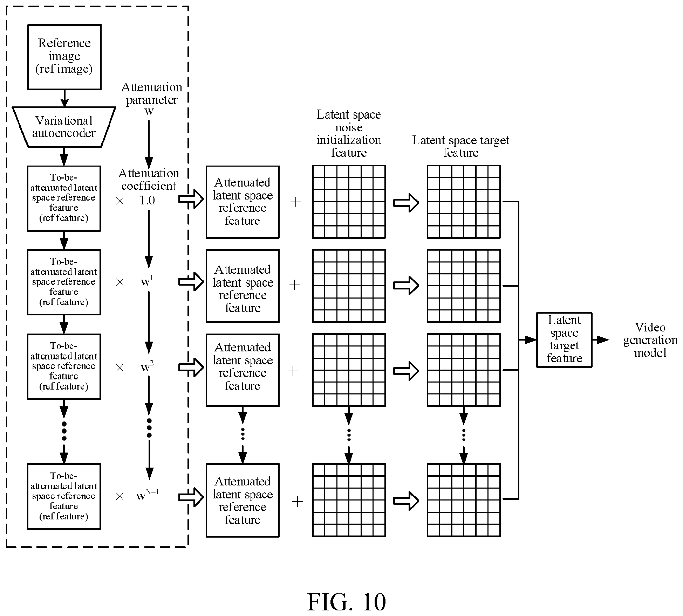

The respectively embedding the N attenuated latent space reference features into corresponding latent space noise initialization features described above refers to respectively performing a point addition operation on the N attenuated latent space reference features and corresponding latent space noise initialization features. In other words, a point addition operation is respectively performed on the N attenuated encoded image features and corresponding latent space noise initialization features to obtain a latent space reference feature set. The latent space reference feature set includes N latent space target features obtained by the point addition operation, and one latent space target feature is obtained by performing a point addition operation on the attenuated encoded image feature and corresponding latent space noise initialization feature. Exemplarily, for the schematic diagram of respectively performing a point addition operation on the N attenuated latent space reference features and corresponding latent space noise initialization features, reference may be made to FIG. 10. As shown in FIG. 10, the performing a point addition operation on the attenuated encoded image feature and the corresponding latent space noise initialization feature refers to performing an addition operation on pixels in the same positions in the attenuated encoded image features having the same feature size and corresponding latent space noise initialization features to generate new latent space target features.

In conclusion, in one aspect, feature attenuation processing on the to-be-attenuated latent space reference features extracted from the reference image is supported, which helps the video generation model gradually reduce reference to the reference image during generation of the N video frames, so that more image content described in the content description text can be introduced to control dynamic changes of the video content. The control of the attenuation coefficients enables diverse video contents. In another aspect, by controlling the intensity of frame-by-frame attenuation (that is, a value of the attenuation parameter), the content change speed of the video content in the finally generated target video is effectively controlled, thereby enriching the diverse content changes of the video frame sequence. In still another aspect, embedding the consistency information extracted from the reference image in the video generation process is supported. In this way, when the feature embedding mechanism is the latent space embedding mechanism, the attenuated latent space reference feature extracted from the reference image can be embedded into the latent space noise initialization feature used during the generation of the frame sequence before the video is generated. In this way, main content semantic information in the reference image can be directly transferred to the process of generating the image content of each video frame during generation of the frame sequence, to guide generation of the image content of each video frame, thereby ensuring specific content consistency between the image content of the video frame and the image content of the reference image. In addition, the content difference between the image content of the video frame and the image content of the reference image is guided by using the image content described in the content description text, thereby helping the user to obtain the target video that not only can match the image content described in the content description text, but also can have content consistency with the image content of the reference image.

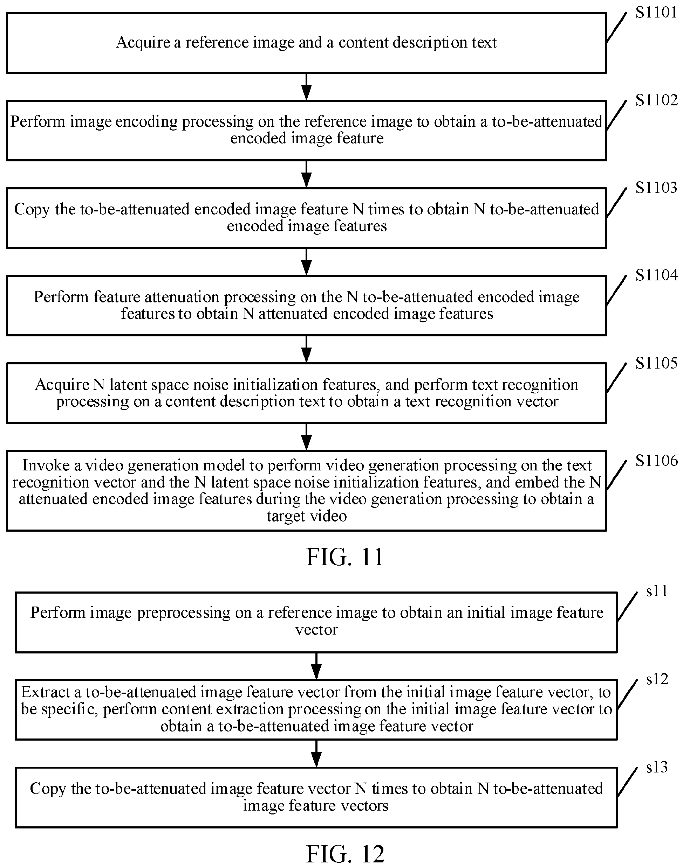

Referring to FIG. 11, FIG. 11 is another schematic flowchart of an image processing method according to an exemplary embodiment of this application. The schematic flowchart mainly shows, from the perspective of model inference, a specific implementation process of image-to-video conversion by using a video generation model and a second image processing module. The method process shown in FIG. 11 may be performed by the computer device described above, and is described in an example in which the computer device is the terminal 601 shown in FIG. 6. The image processing method may include, but not limited to, operations S1101 to S1106.

S1101: Acquire a reference image and a content description text.

The specific implementation process of the embodiment shown in operation S1101 is similar to the specific implementation process shown in operation S701 in the embodiment shown in FIG. 7, and reference may be made to the related descriptions of the specific implementation process shown in operation S701 described above. Details are not described herein again.

S1102: Perform image encoding processing on the reference image to obtain a to-be-attenuated encoded image feature.

S1103: Copy the to-be-attenuated encoded image feature N times to obtain N to-be-attenuated encoded image features.

In operations S1102 to S1103, as described above, the feature embedding mechanism provided in the embodiments of this application includes the latent space embedding mechanism and the multi-level cross attention embedding mechanism. When the feature embedding mechanism is the latent space embedding mechanism, for the specific implementation process shown in operations S1102 to S1103, reference may be made to the related descriptions in related paragraphs shown in operation S702 in the embodiment shown in FIG. 7, and details are not described herein again. The embodiments of this application mainly describe the specific implementation process of performing image copying processing on the reference image (that is, the specific implementation process shown in operations S1102 to S1103) when the feature embedding mechanism is the multi-level cross attention embedding mechanism.

Specifically, when the feature embedding mechanism is the multi-level cross attention embedding mechanism, the specific implementation process shown in operations S1102 to S1103 is performed by the second image processing module shown in FIG. 4b. The second image processing module includes: an image encoder (denoted as image encoder) and a feature attenuation submodule. The image encoder is used for performing image encoding processing on the reference image to obtain a to-be-attenuated encoded image feature, specifically, a to-be-attenuated image feature vector (denoted as image embedding). The feature attenuation submodule is used for performing feature attenuation processing on the to-be-attenuated image feature vector encoded by the image encoder to obtain an attenuated image feature vector. Further, the attenuated image feature vector outputted by the feature attenuation submodule is inputted into the feature extraction module at each level in the Unet network, so that the entire Unet network can perceive semantic information of the main content in the reference image at multiple levels, thereby improving content consistency between the image content of the reference image and the image content of each video frame in the frame sequence.

For the process of performing image encoding processing on the reference image by using the image encoder used in the multi-level cross attention embedding mechanism in the embodiments of this application, reference may be made to FIG. 12. As shown in FIG. 12, the process of the second image processing module performing image encoding processing on the reference image to obtain the to-be-attenuated image feature vector and copying the to-be-attenuated image feature vector may include, but not limited to, operations s11 to s13.

s11: Perform image preprocessing on the reference image to obtain an initial image feature vector.

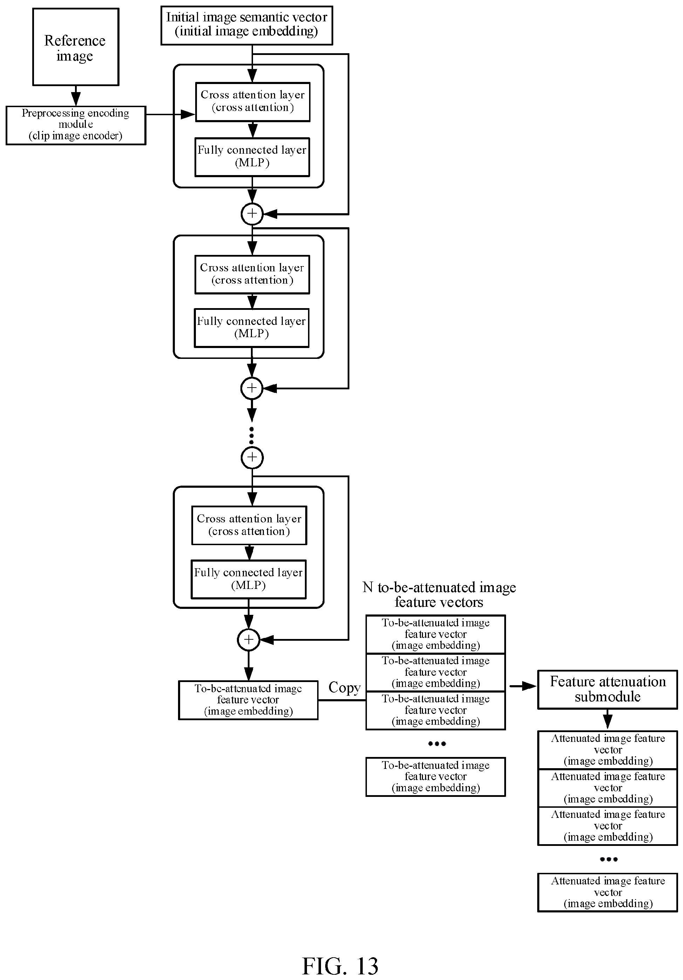

As shown in FIG. 13, the image encoder included in the second image processing module includes a preprocessing encoding module. The preprocessing encoding module may be denoted as a clip image encoder (which may be referred to as a clip model for short). As described above, the clip model can completely recognize elements such as an object, a scenario, and an action in an image, and can also understand the text related to the image, such as a tag, a description, and a title. Therefore, in the embodiments of this application, by setting the clip model in the image encoder, the content semantic information in the reference image can be recognized completely and accurately by virtue of good recognition performance of the clip model.

Specifically, after the reference image is outputted to the image encoder, image preprocessing is first performed on the reference image by using the preprocessing encoding module in the image encoder to obtain an initial image feature vector. The initial image feature vector includes the to-be-attenuated image feature vector and preprocessing information. The to-be-attenuated image feature vector is used for representing main content semantic information in the reference image. The preprocessing information indicates image analysis information for the reference image. The image analysis information mainly includes semantic information about functions of the clip model, for example, classification prediction information of the clip model for the content in the reference image.

s12: Extract the to-be-attenuated image feature vector from the initial image feature vector, to be specific, perform content extraction processing on the initial image feature vector to obtain a to-be-attenuated image feature vector.

After the initial image feature vector is extracted from the reference image based on operation s11 described above, content extraction processing (or referred to as content refinement processing) needs to be performed on the initial image feature vector, to extract, from the initial image feature vector, the to-be-attenuated image feature vector for representing main content semantic information of the reference image. In the embodiments of this application, preset embedding is used to assist in content refinement of the initial image feature vector. The initial image semantic vector may be denoted as initial image embedding, which may be used for indicating weight distribution for content extraction processing on the initial image semantic vector, and the initial image semantic vector may be obtained by performing initialization by using a random weight. Specifically, after preset initial image semantic vector is acquired, content extraction processing is performed on the initial image feature vector based on the initial image semantic vector to obtain the to-be-attenuated image feature vector. Referring to FIG. 13, content extraction processing herein includes an attention operation and a fully connected operation. Specifically, the preset initial image semantic vector and the initial image feature vector encoded by the clip image encoder are inputted together to a cross attention layer for an attention operation, and then the cross attention layer is inputted to a fully connected layer (Multilayer Perceptron, MLP) to integrate the features obtained through the cross attention layer, thereby refining the to-be-attenuated image feature vector from the initial image feature vector.

Further, in the embodiments of this application, a plurality of content refinement mechanisms are set to implement a plurality of times of content extraction processing on the initial image feature vector, so as to improve feature purity of the to-be-attenuated image feature vector extracted from the initial image feature vector. As shown in FIG. 13, content extraction processing is performed by content extraction modules. It is assumed that a quantity of the content extraction modules is M, and M is a positive integer. Each content extraction module corresponds to one instance of content extraction processing/content refinement processing, and each content extraction module includes a cross attention layer and a fully connected layer. Based on this, after the first content extraction module performs content extraction processing on the initial image feature vector and the initial image semantic vector, output information of the first content extraction module may be inputted into the second content extraction module for further content extraction processing. By analogy, output information of the last content extraction module is used as the to-be-attenuated image feature vector.

In the multiple rounds of content extraction processing described above, to avoid excessive loss of original content semantics of the reference image, in the embodiments of this application, the input information of the cross attention layer is further added to the output information of the fully connected layer in the same content extraction module to serve as input information of a next content extraction module, so as to avoid excessive loss of the original content semantics of the reference image during each round of content extraction processing. As shown in FIG. 13, assuming that the quantity of the content extraction modules is M, when M=1, the input information of the first content extraction module, i.e., the input information processed in the 1^{st} round of content extraction processing is: the initial image semantic vector and the initial image feature vector. When M=2, the input information of the second content extraction module, i.e., the input information processed in the 2^{nd} round of content extraction processing is: concatenated information of the output information of the first content extraction module (i.e., a processing result obtained after the first round of content extraction processing) and the initial image semantic vector (that is, information obtained by performing a concatenation operation on features or vectors). When M>2, the input information of an M^{th} content extraction module, i.e., the input information processed in an M^{th} round of content extraction processing is: concatenated information of the output information of an (M-1)^{th} content extraction module and the output information of an (M-2)^{th} content extraction module.

s13: Copy the to-be-attenuated image feature vector N times to obtain N to-be-attenuated image feature vectors.

After the pure to-be-attenuated image feature vector is extracted from the initial image feature vector, the to-be-attenuated image feature vector needs to be copied N times according to a quantity N of frames of the target video to be generated, to obtain N to-be-attenuated image feature vectors.

In conclusion, based on the specific implementation process shown in operations s11 to s13, by performing image preprocessing on the reference image, the initial image feature vector can be a feature vector that can accurately represent the semantics of the reference image, so that the to-be-attenuated image feature vector extracted from the initial image feature vector can also be a feature vector that can accurately represent the semantics of the reference image. Further, the generation of the image content of the video frame based on the to-be-attenuated image feature vector can ensure content consistency between the video frame and the reference image. In the embodiments of this application, when adopting the multi-level cross attention embedding mechanism, the rationale of performing image encoding processing on the reference image by using the image encoder is to ensure that the to-be-attenuated image feature vector encoded by the image encoder can be embedded into the feature extraction module at each level in the Unet network in the video generation model. That is, a data format of the to-be-attenuated image feature vector obtained by performing image encoding processing by using the image encoder satisfies a data format requirement of the feature extraction module for input data.

S1104: Perform feature attenuation processing on the N to-be-attenuated encoded image features to obtain N attenuated encoded image features.

The specific implementation process of operation S1104 is similar to the specific implementation process of operation S703 in the embodiment shown in FIG. 7, and reference may be made to the related descriptions of the specific implementation process of operation S703. Details are not described herein again.

S1105: Acquire N latent space noise initialization features, and perform text recognition processing on the content description text to obtain a text recognition vector.

S1106: Invoke a video generation model to perform video generation processing on the text recognition vector and the N latent space noise initialization features, and embed the N attenuated encoded image features during the video generation processing to obtain the target video.

In operations S1105 to S1106, when the feature embedding mechanism is the latent space embedding mechanism, for the specific implementation process shown in operations S1105 to S1106, reference may be made to the related descriptions in related paragraphs shown in operation S704 in the embodiment shown in FIG. 7, and details are not described herein again. The embodiments of this application mainly describes the specific implementation process of embedding the attenuated image feature vector into the video generation model (that is, the specific implementation process shown in operations S1105 to S1106) when the feature embedding mechanism is the multi-level cross attention embedding mechanism.

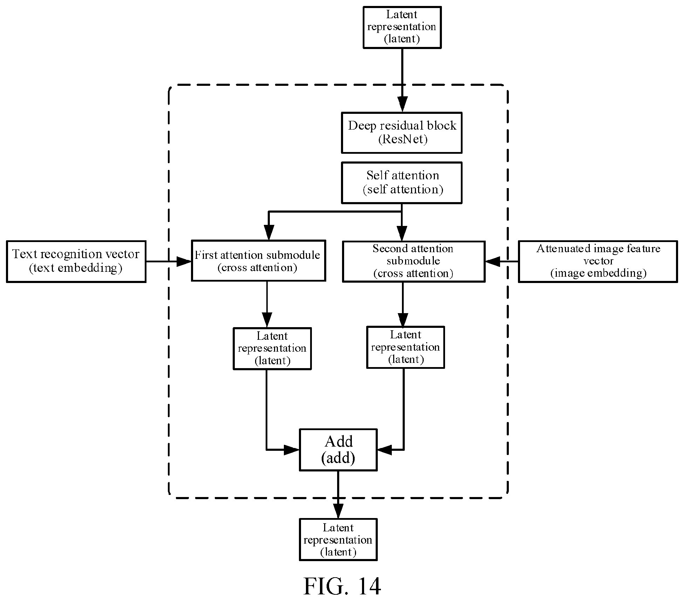

Specifically, when the feature embedding mechanism is the multi-level cross attention embedding mechanism, for the specific implementation process shown in operations S1105 to S1106, reference may be made to FIG. 14. As shown in FIG. 14, in the embodiments of this application, the feature extraction module (Unet block) in the Unet network is fine-tuned to obtain a fine-tuned feature extraction module (new Unet block). Specifically, the fine-tuned feature extraction module is additionally provided with the cross attention mechanism corresponding to texts. In this way, the fine-tuned feature extraction module includes a first attention submodule corresponding to texts and a second attention submodule corresponding to images. That is, compared with the feature extraction module before fine-tuning shown in FIG. 1b, the fine-tuned feature extraction module is additionally provided the second attention submodule (in which cross attention is integrated). The second attention submodule is configured for receiving the attenuated image feature vector extracted by the second image processing module from the reference image, performing an attention operation on the attenuated image feature vector, and adding an attention operation result to the attention result obtained by performing an attention operation on the text recognition vector, so that main content information in the reference image can be inputted into the entire video generation process. When the feature embedding mechanism is the multi-level cross attention embedding mechanism, the feature extraction modules mentioned in the embodiments of this application all refer to the fine-tuned feature extraction module, that is, the feature extraction module shown in FIG. 14.

Based on the fine-tuned feature extraction module shown in FIG. 14, the embedding mode of embedding the N attenuated image feature vectors outputted by the second image processing module into the video generation process may include: In the video generation processing process, the N attenuated image feature vectors are embedded into the feature extraction module at each level of the Unet network in the video generation model. Then, the feature extraction module is invoked to perform video generation processing on the embedded N attenuated image feature vectors, the text recognition vector, and the N latent space noise initialization features to obtain a target video. The process of embedding the N attenuated image feature vectors into the target feature extraction module is described in an example in which the feature extraction module at any level in the plurality of levels of feature extraction modules is denoted as a target feature extraction module. Specifically, an attention operation is performed on the received N attenuated image feature vectors by using a second attention mechanism in the target feature extraction module to obtain a second attention operation result, and an attention operation is performed on the received text recognition vector by using a first attention mechanism in the target feature extraction module to obtain a first attention operation result; and the second attention operation result and the first attention operation result are fused to obtain output information of the target feature extraction module. Through the foregoing embedding process, the main content information in the reference image can be embedded into the video generation process, specifically, embedded into the feature extraction module at each level, to improve content consistency between the image content of each video frame in the finally generated target video and the image content of the reference image.

In more detail, still referring to FIG. 14, when receiving the N attenuated image feature vectors, the target feature extraction module further receives the text recognition vector obtained by recognizing the content description text, and preceding features. For example, the preceding features received by the first feature extraction module are N latent space noise initialization features, and the preceding features received by the other feature extraction modules among the M feature extraction modules, except for the first feature extraction module, are feature information obtained after feature extraction processing is performed on the N latent space noise initialization features by the previous feature extraction module adjacent to the current feature extraction module. Therefore, the process of the target feature extraction module performing, by using the second attention submodule, an attention operation on the N attenuated image feature vectors specifically includes: performing, by using the second attention submodule, an attention operation on the N attenuated image feature vectors and the preceding features to obtain the second attention operation result. Similarly, the process of the target feature extraction module performing, by using the first attention submodule, an attention operation on the text recognition vector specifically includes: performing, by using the first attention submodule, an attention operation on the text recognition vector and the preceding features to obtain the first attention operation result.

In conclusion, in one aspect, feature attenuation processing on the to-be-attenuated latent space reference features extracted from the reference image is supported, which helps the video generation model gradually reduce reference to the reference image during generation of the N video frames, so that more image content described in the content description text can be introduced to control dynamic changes of the video content. The control of the attenuation coefficients enables diverse video contents. In another aspect, by controlling the intensity of frame-by-frame attenuation (that is, a value of the attenuation parameter), the content change speed of the video content in the finally generated target video can be effectively controlled, thereby enriching the diverse content changes of the video frame sequence. In still another aspect, embedding the consistency information extracted from the reference image in the video generation process is supported. When the feature embedding mechanism is the multi-level cross attention embedding mechanism, the attenuated image feature vector extracted from the reference image can be embedded into the attention operation process of the feature extraction module at each level in the Unet network. In this way, when the Unet model generates the frame sequence, the image content of each video frame matches the main content semantic information in the reference image, thereby achieving high content consistency between the video content of the entire video frame sequence and the image content of the reference image and enabling the video content of the entire video frame sequence to be more coherent without abrupt changes in the content. In addition, the content difference between the image content of the video frame and the image content of the reference image is guided by using the image content described in the content description text, thereby helping the user to obtain the target video that not only can match the image content described in the content description text, but also can have content consistency with the image content of the reference image.

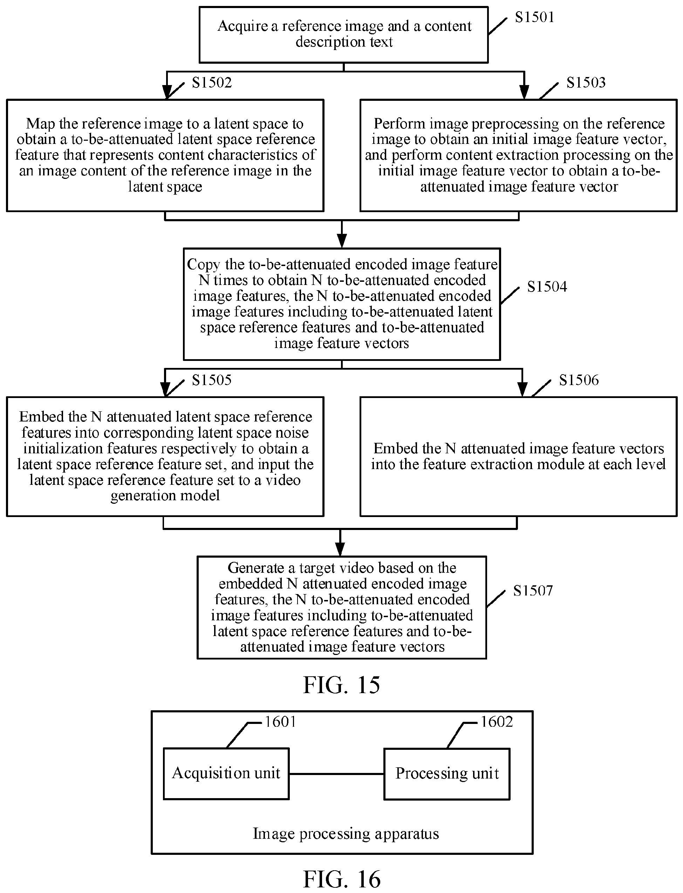

Referring to FIG. 15, FIG. 15 is still another schematic flowchart of an image processing method according to an exemplary embodiment of this application. The schematic flowchart mainly shows, from the perspective of model inference, a specific implementation process of image-to-video conversion by using a video generation model, a first image processing module, and a second image processing module. The method process shown in FIG. 15 may be performed by the computer device described above. For example, the computer device may be the terminal 601 and/or the server 602 shown in FIG. 6 above. The image processing method may include, but not limited to, operations S1501 to S1507.

S1501: Acquire a reference image and a content description text.

The specific implementation process of operation S1501 is similar to the specific implementation process of operation S701 in the embodiment shown in FIG. 7, and reference may be made to the related descriptions of the specific implementation process of operation S701. Details are not described herein again.

S1502: Map the reference image to a latent space to obtain a to-be-attenuated latent space reference feature that represents content characteristics of an image content of the reference image in the latent space.

For the specific implementation process of operation S1502, reference may be made to the related descriptions of the specific implementation process of operation S702 in the embodiment shown in FIG. 7. Details are not described herein again.

S1503: Perform image preprocessing on the reference image to obtain an initial image feature vector, and perform content extraction processing on the initial image feature vector to obtain a to-be-attenuated image feature vector.

For the specific implementation process of operation S1503, reference may be made to the related descriptions of the specific implementation process of operations s11 to s12 in the embodiment shown in FIG. 12. Details are not described herein again.

The execution sequence of operation S1502 and operation S1503 is not limited in the embodiments of this application.

S1504: Copy the to-be-attenuated encoded image feature N times to obtain N to-be-attenuated encoded image features, the N to-be-attenuated encoded image features including to-be-attenuated latent space reference features and to-be-attenuated image feature vectors.

The specific implementation process of operation S1504 is similar to the specific implementation process of operation S703 in the embodiment shown in FIG. 7, and reference may be made to the related descriptions of the specific implementation process of operation S703. Details are not described herein again.

S1505: Embed the N attenuated latent space reference features into corresponding latent space noise initialization features respectively to obtain a latent space reference feature set, and input the latent space reference feature set to a video generation model.

For the specific implementation process of operation S1505, reference may be made to the related descriptions of the specific implementation process of operation S704 in the embodiment shown in FIG. 7. Details are not described herein again.

S1506: Embed the N attenuated image feature vectors into the feature extraction module at each level.

For the specific implementation process of operation S1506, reference may be made to the related descriptions of the specific implementation process of operation S1106 in the embodiment shown in FIG. 11. Details are not described herein again.

The execution sequence of operation S1505 and operation S1506 is not limited in the embodiments of this application.

S1507: Generate a target video based on the embedded N attenuated encoded image features, the N to-be-attenuated encoded image features including to-be-attenuated latent space reference features and to-be-attenuated image feature vectors.

In the specific implementation, when the feature embedding mechanism includes both the latent space embedding mechanism and the multi-level cross attention embedding mechanism, the generating a target video based on the embedded N attenuated encoded image features may include: invoking a video generation model to perform video generation processing on the text recognition vector, the latent space reference feature set, and the N attenuated image feature vectors to obtain the target video. It can be seen that when the feature embedding mechanism includes both the latent space embedding mechanism and the multi-level cross attention embedding mechanism, reference may be made to both the N attenuated latent space reference features outputted by the first image processing module and the N attenuated image feature vectors outputted by the second image processing module during the generation of the target video. For the mode of embedding the N attenuated latent space reference features and the N attenuated image feature vectors into the video generation model, reference may be made to the foregoing related descriptions, and details are not described herein again.

In conclusion, in one aspect, the embodiments of this application supports feature attenuation processing on the to-be-attenuated latent space reference features extracted from the reference image, which helps the video generation model gradually reduce reference to the reference image during generation of the N video frames, so that more image content described in the content description text can be introduced to control dynamic changes of the video content. The control of the attenuation coefficients enables diverse video contents. In another aspect, the embodiments of this application support effective control of the content change speed of the video content in the finally generated target video by controlling the intensity of frame-by-frame attenuation (that is, a value of the attenuation parameter), thereby enriching the diverse content changes of the video frame sequence. In still another aspect, the embodiments of this application support two feature embedding mechanisms. The latent space embedding mechanism directly transfers main content semantic information in the reference image to the process of generating the image content of each video frame during generation of the frame sequence, to guide generation of the image content of each video frame. The multi-level cross attention embedding mechanism can embed the attenuated image feature vector extracted from the reference image in the attention operation process of the feature extraction module at each level in the Unet network, so that when the Unet model generates the frame sequence, the image content of each video frame matches the main content semantic information in the reference image (that is, the image content of the video frame is generated with reference to the main content semantic information of the reference image), thereby achieving high content consistency between the video content of the entire video frame sequence and the image content of the reference image and enabling the video content of the entire video frame sequence to be more coherent without abrupt changes in the content. Therefore, by combining the two feature embedding mechanisms, the video generation model can fully receive the main content semantic information in the reference image, thereby improving content consistency between the image content of each video frame in the finally generated target video and the image content of the reference image. In yet another aspect, the content difference between the image content of the video frame and the image content of the reference image is guided by using the image content described in the content description text, thereby helping the user to obtain the target video that not only can match the image content described in the content description text, but also can have content consistency with the image content of the reference image.

The foregoing describes the method in the embodiments of this application in detail. To better implement the foregoing solutions in the embodiments of this application, correspondingly, the following provides an apparatus in the embodiments of this application. In the embodiments of this application, the term "module" or "unit" refers to a computer program or a part of a computer program with a predetermined function, which works together with other related parts to achieve a predetermined objective, and may be fully or partially implemented using software, hardware (such as a processing circuit or a memory), or a combination thereof. Similarly, one processor (or more processors or memories) may be configured to realize one or more modules or units. Furthermore, each module or unit may be a part of an integrated module or unit that includes the functionality of the module or unit.

FIG. 16 shows a schematic structural diagram of an image processing apparatus according to an exemplary embodiment of this application. The image processing apparatus may be configured to perform some or all operations in the method embodiments shown in FIG. 7, FIG. 11 or FIG. 15. Referring to FIG. 16, the apparatus includes the following units:
an acquisition unit 1601, configured to acquire a reference image and a content description text, the content description text describing a video content in a target video to be generated based on the reference image, the target video comprising N video frames in sequence and N being a positive integer; and
a processing unit 1602, configured to perform encoding and copying processing on the reference image to obtain N encoded image features, the encoded image feature representing a content characteristic of a reference image content of the reference image;
the processing unit 1602 being further configured to perform feature attenuation processing on the N ncoded image features to obtain N attenuated encoded image features, the feature attenuation processing being used for controlling a content difference between an image content of each of the video frames and the reference image content; and
the processing unit 1602 being further configured to perform video generation processing on the N attenuated encoded image features according to the content description text to generate the target video, where each of the N video frames is generated based on a respective one of the N attenuated encoded image features.

In an implementation, when being configured to perform feature attenuation processing on the N encoded image features to obtain the N attenuated encoded image features, the processing unit is specifically configured to:
acquire an attenuation parameter, the attenuation parameter representing a degree of content difference between frame image contents of adjacent video frames;
compute N attenuation coefficients by using the attenuation parameter, the N attenuation coefficients and the N encoded image features being in a one-to-one correspondence with each other; and
perform a multiplication operation on each of the attenuation coefficients and the corresponding encoded image feature to obtain the attenuated encoded image feature corresponding to each of the N image features.

In an implementation, when being configured to perform encoding and copying processing on the reference image to obtain the N encoded image features, the processing unit is specifically configured to:
perform image encoding processing on the reference image to obtain an encoded image feature; and
copy the encoded image feature N times to obtain the N encoded image features.

In an implementation, the encoded image feature includes an latent space reference feature , and when being configured to perform image encoding processing on the reference image to obtain the encoded image feature, the processing unit is specifically configured to:
map the reference image to a latent space to obtain the latent space reference feature.

In an implementation, the encoded image feature includes an image feature vector , and when being configured to perform image encoding processing on the reference image to obtain theencoded image feature, the processing unit is specifically configured to:
perform image preprocessing on the reference image to obtain an initial image feature vector, the initial image feature vector including the image feature vector and preprocessing information, and the preprocessing information indicating image analysis information of the reference image; and
extract the image feature vector from the initial image feature vector.

In an implementation, when being configured to extract the to-be-attenuated image feature vector from the initial image feature vector, the processing unit is specifically configured to:
acquire an initial image semantic vector, the initial image semantic vector indicating a weight distribution for content extraction processing on the initial image feature vector; and
inputting the initial image semantic vector and the initial image feature vector into a cross attention layer for an attention operation, and inputting an output of the cross attention layer into a fully connected layer for a fully connected operation to obtain the image feature vector.

In an implementation, the content extraction processing is performed by M content extraction modules. Each content extraction module corresponds to one instance of content extraction processing, and M is a positive integer. Input information of the content extraction modules includes:
when M=1, input information of a first content extraction module is: the initial image semantic vector and the initial image feature vector;
when M=2, input information of a second content extraction module is: concatenated information obtained by concatenating output information of the first content extraction module and the initial image semantic vector; and
when M>2, input information of an M^{th} content extraction module is: concatenated information obtained by concatenating output information of an (M-1)^{th} content extraction module and output information of an (M-2)^{th} content extraction module.

In an implementation, when being configured to perform video generation processing on the N attenuated encoded image features according to the content description text to generate the target video, the processing unit is specifically configured to:
acquire N latent space noise initialization features, the latent space noise initialization features being obtained by adding random noise to a blank latent space reference feature, each latent space noise initialization feature being used for generating one video frame; and
perform text recognition processing on the content description text to obtain a text recognition vector, the text recognition vector representing semantic information of the content description text; and
invoke a video generation model to perform video generation processing on the text recognition vector and the N latent space noise initialization features, and embedding the N attenuated encoded image features during the video generation processing to obtain the target video.

In an implementation, the attenuated encoded image feature includes an attenuated latent space reference feature, and when being configured to invoke the video generation model to perform video generation processing on the text recognition vector and the N latent space noise initialization features, and embed the N attenuated encoded image features during the video generation processing to obtain the target video, the processing unit is specifically configured to:
respectively embed the N attenuated latent space reference features into corresponding latent space noise initialization features to obtain a latent space reference feature set, the latent space reference feature set including N latent space target features, and each latent space target feature being obtained by embedding one attenuated latent space reference feature into a corresponding latent space noise initialization feature; and
invoke the video generation model to perform video generation processing on the latent space reference feature set and the text recognition vector to obtain the target video.

In an implementation, the video generation model includes a plurality of levels of feature extraction modules. The attenuated encoded image feature includes an attenuated image feature vector.

When being configured to embed the N attenuated encoded image features during the video generation processing, the processing unit is specifically configured to:
embed the N attenuated image feature vectors into the feature extraction module at each level during the video generation processing.

In an implementation, the feature extraction module includes a first attention submodule corresponding to texts and a second attention submodule corresponding to images. The feature extraction module at any level is denoted as a target feature extraction module. When being configured to embed the N attenuated image feature vectors into the feature extraction module at each level, the processing unit is specifically configured to:
perform, by using the second attention submodule in the target feature extraction module, an attention operation on the N attenuated image feature vectors to obtain a second attention operation result, and
perform, by using the first attention submodule in the target feature extraction module, an attention operation on the text recognition vector to obtain a first attention operation result; and
fuse the second attention operation result and the first attention operation result to obtain output information of the target feature extraction module.

In an implementation, the video generation model includes the plurality of levels of feature extraction modules, and a spatio-temporal attention module is embedded into the feature extraction module at each level. The processing unit is further configured to:
perform, by using the spatio-temporal attention module embedded in the feature extraction module, prediction processing on output information outputted by the feature extraction module to obtain a prediction result. The prediction result indicates a content correlation between the image contents of two adjacent video frames when the frame sequence is generated based on the output information outputted by the feature extraction module.

According to an embodiment of this application, the units in the image processing apparatus shown in FIG. 16 may be separately or all combined into one or several other units, or one (or some) of the units may be further split into a plurality of units having smaller functions, so that same operations can be implemented without affecting implementation of the technical effects of the embodiments of this application. The foregoing units are divided based on logical functions. In an actual application, a function of one unit may alternatively be implemented by a plurality of units, or functions of a plurality of units are implemented by one unit. In another embodiment of this application, the image processing apparatus may further include another unit. During actual application, the functions may alternatively be implemented with assistance of the another unit, and may be implemented with cooperation of a plurality of units. According to another embodiment of this application, a computer program (including program code) capable of executing the operations involved in the corresponding methods shown in FIG. 7, FIG. 11, or FIG. 15 may be run on a general-purpose computing device, such as a computer, that includes processing elements and storage elements such as a central processing unit (CPU), a random access memory (RAM), and a read only memory (ROM), to construct the image processing apparatus shown in FIG. 16 and to implement the image processing method in the embodiments of this application. The computer program may be recorded in, for example, a computer-readable recording medium, and may be loaded into the foregoing computing device through the computer-readable recording medium and run on the computing device.

In the embodiments of this application, in one aspect, the N attenuated encoded image features are obtained based on the N to-be-attenuated encoded image features, and the N to-be-attenuated encoded image features indicate the content characteristics of the image content of the reference image. Therefore, when the video generation model is invoked to perform video generation processing on the N attenuated encoded image features to obtain the target video, since the N attenuated encoded image features represent the content characteristics of the image content of the reference image to different feature degrees, the image content of each video frame in the frame sequence included in the target video generated based on the N attenuated encoded image features has content consistency with the image content of the reference image (e.g., the subject (such as, a person or environment)) in the image remains the same, and also has a content difference from the image content of the reference image. In another aspect, in the process of invoking the generation model to perform video generation processing on the N attenuated encoded image features to obtain the target video, reference to the reference image can be reduced frame by frame in the process of invoking the video generation model to generate the N video frames according to the reference image. This help the video generation model to introduce more image content described in the content description text to constrain/guide the generation of the target video. In this way, the image content of each video frame in the frame sequence included in the target video can match the image content described in the content description text, for example, match presentation forms of the subject in the video frame (for example, an action of a person matches an action described in the content description text); and moreover, the image content described in the content description text can assist in the generation of image elements of the part having content differences between the image content of the video frame and the image content of the reference image. In still another aspect, each attenuated encoded image feature in the N attenuated encoded image features is configured for generating one video frame. Because the N attenuated encoded image features are different, the image contents of the N video frames are different, thereby ensuring that the target video can present a content change effect.

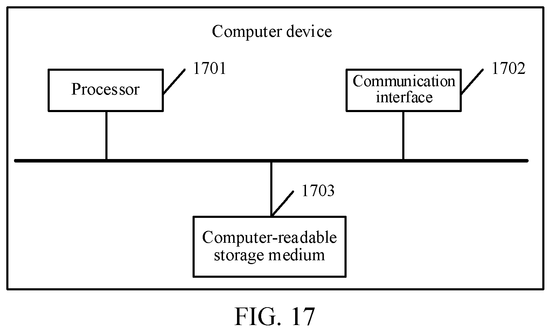

FIG. 17 shows a schematic structural diagram of a computer device according to an exemplary embodiment of this application. Referring to FIG. 17, the computer device includes a processor 1701, a communication interface 1702, and a computer-readable storage medium 1703. The processor 1701, the communication interface 1702, and the computer-readable storage medium 1703 may be connected by using a bus or in another mode. The communication interface 1702 is configured to receive and send data. The computer-readable storage medium 1703 may be stored in a memory in the computer device. The computer-readable storage medium 1703 is configured to store a computer program. The processor 1701 is configured to execute the computer program stored in the computer-readable storage medium 1703. The processor 1701 (or referred to as a CPU) is a computing core and a control core of the computer device, and is suitable for implementing one or more computer programs, and specifically suitable for loading and executing one or more computer programs to implement corresponding method procedures or corresponding functions.

An embodiment of this application further provides a computer-readable storage medium (memory). The computer-readable storage medium is a storage device in a computer device, and is configured to store a program and data. The computer-readable storage medium herein may include a built-in storage medium in the computer device, or may certainly include an extended storage medium supported by the computer device. The computer-readable storage medium provides a storage space, and the storage space stores a processing system of the computer device. In addition, one or more computer programs suitable for being loaded and executed by the processor 1701 are further stored in the storage space, and these computer programs may be one or more computer programs (including program code). The computer-readable storage medium herein may be a high-speed RAM, or may be a non-volatile memory, such as at least one magnetic disk storage. In some embodiments, the computer storage medium may be at least one computer-readable storage medium far away from the foregoing processor.

In an embodiment, the computer device may be the terminal or the server described in the above embodiments. The computer-readable storage medium has one or more computer programs stored therein. The one or more computer programs stored in the computer-readable storage medium are loaded and executed by the processor 1701 to implement the corresponding operations in the embodiments of the image processing method described above. In specific implementations, the one or more computer programs in the computer-readable storage medium are loaded by the processor 1701 to perform the operations in the embodiments of this application. For the steps in the embodiments of this application, reference may be made to related descriptions in the foregoing embodiments. Details are not described herein again.

Based on the same inventive concept, a principle and beneficial effects of resolving a problem by the computer device provided in the embodiments of this application are similar to a principle and beneficial effects of resolving the problem according to the image processing method in the method embodiments of this application. Refer to the principle and the beneficial effects of implementation of the method. For brief of description, details are not described herein again.

An embodiment of this application further provides a computer program product. The computer program product includes a computer program. The computer program, when executed by a processor, implements the image processing method described above.

A person of ordinary skill in the art may be aware that the exemplary units and algorithm operations described with reference to the embodiments disclosed in this application can be implemented by electronic hardware, or a combination of computer software and electronic hardware. Whether the functions are executed in hardware or software depends on particular applications and design constraint conditions of the technical solution. A person skilled in the art may use different methods to implement the described functions for each particular application, but such implementation is not to be considered beyond the scope of this application.

In the foregoing embodiments, it may be partially or completely implemented through software, hardware, firmware, or any combination thereof. When the functions are implemented by software, all or part of the functions may be implemented in the form of a computer program product. The computer program product includes one or more computer programs (one or more). When the computer program instructions are loaded and executed on a computer, all or some of the processes or functions described in the embodiments of this application are generated. The computer may be a general-purpose computer, a special-purpose computer, a computer network, or any other programmable device. The computer program may be stored in the computer-readable storage medium or transmitted through the computer-readable storage medium. The computer programs may be transmitted from a website, computer, server, or data center to another website, computer, server, or data center in a wired (such as a coaxial cable, an optical fiber, or a digital subscriber line (DSL)) or wireless (such as infrared, radio, or microwave) mode. The computer-readable storage medium may be any available medium that can be accessed by the computer, or may be a data storage device, such as a server or a data center in which one or more available media are integrated. The available medium may be a magnetic medium (for example, a floppy disk, a hard disk, or a magnetic tape), an optical medium (for example, a digital video disc (DVD)), a semiconductor medium (for example, a solid state disk (SSD)), or the like.

The foregoing descriptions are merely specific implementations of this application, and the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processing method, executable by a computer device, the method comprising:
acquiring a reference image and a content description text, the content description text describing a video content in a target video to be generated based on the reference image, the target video comprising N video frames in sequence and N being a positive integer;
performing encoding and copying processing on the reference image to obtain N encoded image features, the encoded image feature representing a content characteristic of a reference image content;
performing feature attenuation processing on the N encoded image features to obtain N attenuated encoded image features, the feature attenuation processing being used for controlling a content difference between an image content of each of the N video frames and the reference image content; and
performing video generation processing on the N attenuated encoded image features according to the content description text to generate the target video, wherein each of the N video frames is generated based on a respective one of the N attenuated encoded image features.

2. The method according to claim 1, wherein the performing feature attenuation processing on the N encoded image features to obtain N attenuated encoded image features comprises:
acquiring an attenuation parameter, the attenuation parameter representing a degree of content difference between frame image contents of adjacent video frames;
computing N attenuation coefficients by using the attenuation parameter, the N attenuation coefficients and the N encoded image features being in a one-to-one correspondence with each other; and
performing a multiplication operation on each of the attenuation coefficients and a corresponding encoded image feature to obtain an attenuated encoded image feature corresponding to each of the N image features.

3. The method according to claim 1 or 2, wherein the performing encoding and copying processing on the reference image to obtain N encoded image features comprises:
performing image encoding processing on the reference image to obtain an encoded image feature ; and
copying the image encoding feature N times to obtain the N encoded image features.

4. The method according to any one of claims 1 to 3, wherein the encoded image feature comprises a latent space reference feature , and the performing image encoding processing on the reference image to obtain an encoded image feature comprises:
mapping the reference image to a latent space to obtain the latent space reference feature.

5. The method according to any one of claims 1 to 4, wherein the encoded image feature comprises an image feature vector, and the performing image encoding processing on the reference image to obtain an encoded image feature comprises:
performing image preprocessing on the reference image to obtain an initial image feature vector, the initial image feature vector comprising the image feature vector and preprocessing information, and the preprocessing information indicating image analysis information of the reference image; and
extracting the image feature vector from the initial image feature vector.

6. The method according to any one of claims 1 to 5, wherein the extracting the image feature vector from the initial image feature vector comprises:
acquiring an initial image semantic vector, the initial image semantic vector indicating a weight distribution for content extraction processing on the initial image feature vector; and
inputting the initial image semantic vector and the initial image feature vector into a cross attention layer for an attention operation, and inputting an output of the cross attention layer into a fully connected layer for a fully connected operation, to obtain the image feature vector.

7. The method according to any one of claims 1 to 6, wherein the content extraction processing is performed by M content extraction modules, each content extraction module corresponding to one instance of content extraction processing, and M being a positive integer; and input information of the content extraction module comprises:
when M=1, input information of a first content extraction module is: the initial image semantic vector and the initial image feature vector;
when M=2, input information of a second content extraction module is: concatenated information obtained by concatenating output information of the first content extraction module and the initial image semantic vector; and
when M>2, input information of an M^{th} content extraction module is: concatenated information obtained by concatenating output information of an (M-1)^{th} content extraction module and output information of an (M-2)^{th} content extraction module.

8. The method according to any one of claims 1 to 7, wherein the performing video generation processing on the N attenuated encoded image features according to the content description text to generate a target video comprises:
acquiring N latent space noise initialization features, the latent space noise initialization features being obtained by adding random noise to a blank latent space reference feature, each latent space noise initialization feature being used for generating one video frame; and
performing text recognition processing on the content description text to obtain a text recognition vector, the text recognition vector representing semantic information of the content description text; and
invoking a video generation model to perform video generation processing on the text recognition vector and the N latent space noise initialization features, and embedding the N attenuated encoded image features during the video generation processing to obtain the target video.

9. The method according to any one of claims 1 to 8, wherein the attenuated encoded image feature comprises an attenuated latent space reference feature, and the invoking a video generation model to perform video generation processing on the text recognition vector and the N latent space noise initialization features, and embedding the N attenuated encoded image features during the video generation processing to obtain the target video comprises:
embedding the N attenuated latent space reference features into corresponding latent space noise initialization features respectively to obtain a latent space reference feature set, the latent space reference feature set comprising N latent space target features, and each latent space target feature being obtained by embedding one attenuated latent space reference feature into a corresponding latent space noise initialization feature; and
invoking the video generation model to perform video generation processing on the latent space reference feature set and the text recognition vector to obtain the target video.

10. The method according to any one of claims 1 to 9, wherein the video generation model comprises a plurality of levels of feature extraction modules; the attenuated encoded image feature comprises an attenuated image feature vector; and
the embedding the N attenuated encoded image features during the video generation processing comprises:
embedding the N attenuated image feature vectors into the feature extraction module at each level during the video generation processing.

11. The method according to any one of claims 1 to 10, wherein the feature extraction module comprises a first attention submodule corresponding to texts and a second attention submodule corresponding to images; the feature extraction module at any level is denoted as a target feature extraction module; and the embedding the N attenuated image feature vectors into the feature extraction module at each level comprises:
performing, by using the second attention submodule in the target feature extraction module, an attention operation on the N attenuated image feature vectors to obtain a second attention operation result; and
performing, by using the first attention submodule in the target feature extraction module, an attention operation on the text recognition vector to obtain a first attention operation result; and
fusing the second attention operation result and the first attention operation result to obtain output information of the target feature extraction module.

12. The method according to any one of claims 1 to 11, wherein the video generation model comprises the plurality of levels of feature extraction modules, and a spatio-temporal attention module is embedded into the feature extraction module at each level; and the method further comprises:
performing, by using the spatio-temporal attention module embedded in the feature extraction module, prediction processing on output information outputted by the feature extraction module to obtain a prediction result, the prediction result indicating a content correlation between the image contents of two adjacent video frames when the frame sequence is generated based on the output information outputted by the feature extraction module.

13. An image processing apparatus, applicable to a computer device, the image processing apparatus comprising:
an acquisition unit, configured to acquire a reference image and a content description text, the content description text describing a video content in a target video to be generated based on the reference image, the target video comprising N video frames in sequence and N being a positive integer; and
a processing unit, configured to perform encoding and copying processing on the reference image to obtain N encoded image features, the encoded image feature representing a content characteristic of a reference image content;
the processing unit being further configured to perform feature attenuation processing on the N encoded image features to obtain N attenuated encoded image features, the feature attenuation processing being used for controlling a content difference between an image content of each of the N video frames and the reference image content; and
the processing unit being further configured to perform video generation processing on the N attenuated encoded image features according to the content description text to generate the target video, wherein each of the N video frames is generated based on a respective one of the N attenuated encoded image features.

14. A computer device, comprising
a processor, suitable for executing computer programs; and
a computer-readable storage medium, having a computer program stored therein, the computer program, when executed by the processor, implementing the image processing method according to any one of claims 1 to 12.

15. A computer-readable storage medium, having a computer program stored therein, the computer program being suitable for being loaded by a processor to perform the image processing method according to any one of claims 1 to 12.

16. A computer program product, comprising a computer program, the computer program, when executed by a processor, implementing the image processing method according to any one of claims 1 to 12.
